# EUROPEAN PATENT APPLICATION

(11) **EP 4 773 325 A1**
(43) Date of publication of application: **08.07.2026**
(21) Application number: 24895548.6
(22) Date of filing: 13.06.2024
(51) Int. Cl.: H01M 10/0587

(54) **BATTERY INSERTION DEVICE, BATTERY ASSEMBLY METHOD, AND BATTERY ASSEMBLY SYSTEM**

(30) Priority: 30.11.2023 CN 202311641516
(71) Applicant: Contemporary Amperex Technology Co., Limited, Ningde, Fujian 352100 (CN)
(72) Inventor: WU, Kai, Ningde, Fujian 352100 (CN); SUN, Weiwei, Ningde, Fujian 352100 (CN); ZHANG, Yongli, Ningde, Fujian 352100 (CN); PAN, Wensheng, Ningde, Fujian 352100 (CN); TANG, Wenxiang, Ningde, Fujian 352100 (CN)
(74) Representative: Ziebig Hengelhaupt Intellectual Property Attorneys Patentanwaltskanzlei PartGmbB
(86) International application number: PCT/CN2024/099050
(87) International publication number: WO 2025/112445

(57) **Abstract**

The present application discloses a battery insertion device, a battery assembly method, and a battery assembly system. The insertion device comprises a machine frame, a bearing mechanism, and an insertion mechanism; the bearing mechanism is arranged on the machine frame, and is used for bearing a bottom cover and an electrode assembly supported above the bottom cover; and the insertion mechanism is arranged on the machine frame, and comprises a case fixing mechanism and a tab part guide mechanism, the case fixing mechanism is used for fixing a case, and the tab part guide mechanism and the case fixing mechanism both can get close to or away from the bearing mechanism, wherein the case fixing mechanism is configured to sleeve the case onto the outer side of the electrode assembly by means of an open end when moving close to the bearing mechanism; and the tab part guide mechanism is configured to guide a tab part to penetrate out of an accommodating cavity through a through hole when the case is sleeved on the electrode assembly. According to the present application, by means of the mode, the tab part smoothly extends out of the case, thereby achieving the accurate insertion of the electrode assembly, reducing the battery preparation difficulty, and improving the assembly efficiency and the yield of batteries.

## Description

The present application claims priority to Chinese Patent Application No. 202311641516X filed on November 30, 2023 and entitled "HOUSING INSERTION APPARATUS AND ASSEMBLY METHOD FOR BATTERY, AND BATTERY ASSEMBLY SYSTEM", which is incorporated herein by reference in its entirety.

### TECHNICAL FIELD

The present application relates to the field of battery technologies, and in particular, to a housing insertion apparatus and assembly method for a battery, and a battery assembly system.

### BACKGROUND

A battery refers to an apparatus that can convert chemical energy into electric energy, typically housed in a cup, a tank, or other containers, or a part of a composite container that contains an electrolyte solution and metal electrodes to generate an electric current. Thanks to advances in science and technology, batteries offering advantages such as portability, ease of charging and discharging operations, and stable long-term power supply are widely used in fields such as automobiles, household appliances, and aerospace.

The tab part of the battery is a metal conductor that leads the positive electrode and the negative electrode from the battery cell to the housing. Therefore, during the assembly of the battery, the tab part of the battery needs to be led out from the housing to serve as a contact point when the battery is charged and discharged. However, during the assembly of the battery, when the battery cell of the battery is assembled into the housing, the tab part is easily bent inside the housing and cannot extend out of the housing. This results in a relatively high difficulty in the battery's assembly and manufacturing process, and a low yield rate in battery manufacturing.

### SUMMARY

In view of the above problems, the present application provides a housing insertion apparatus and assembly method for a battery, and a battery assembly system, which can enable a tab part to smoothly extend out of a housing, thereby achieving the precise insertion of the electrode assembly into the housing, reducing the difficulty of the battery manufacturing process, and improving the assembly efficiency and the yield rate of the battery.

In a first aspect, the present application provides a housing insertion apparatus for a battery, where the battery includes a housing, a bottom cover, and an electrode assembly. The housing is provided with an open end, a wall of the housing opposite to the open end is provided with a post terminal, the post terminal is provided with a through hole, and the housing and the bottom cover are connected to form an accommodating cavity in communication with the through hole. An active substance-coated part of the electrode assembly is arranged in the housing, and a tab part of the electrode assembly passes through the through hole and is connected to a side of the post terminal facing away from the accommodating cavity.

The housing insertion apparatus includes a frame, a bearing mechanism, and a housing assembly mechanism. The bearing mechanism is arranged on the frame and configured to bear the bottom cover and the electrode assembly supported above the bottom cover. The housing assembly mechanism is arranged on the frame and includes a housing fixing mechanism and a tab part guiding mechanism, where the housing fixing mechanism is configured to fix the housing, and the tab part guiding mechanism and the housing fixing mechanism are both capable of moving toward or away from the bearing mechanism. The housing fixing mechanism is configured to be capable of sleeving the housing over the outer side of the electrode assembly via the open end when moving toward the bearing mechanism. The tab part guiding mechanism is configured to guide the tab part to extend out of the accommodating cavity from the through hole when the housing is sleeved over the electrode assembly.

In the technical solutions of the embodiments of the present application, the housing fixing mechanism and the tab part guiding mechanism are arranged on the housing insertion apparatus. The housing fixing mechanism can sleeve the housing onto the outer side of the electrode assembly through the open end, and during the process of sleeving the housing onto the electrode assembly, the tab part guiding mechanism can guide the tab part to extend out of the accommodating cavity from the through hole. This design ensures that during the insertion of the electrode assembly of the battery into the housing, the tab part of the battery can be smoothly guided to extend out of the accommodating cavity from the through hole, such that the tab part is less likely to block the housing from being sleeved onto the outer side of the electrode assembly, thereby achieving the precise insertion of the electrode assembly into the housing, reducing the difficulty of the battery manufacturing process, and improving the assembly efficiency and the yield rate of the battery.

In some embodiments, the tab part guiding mechanism and the housing fixing mechanism are both arranged above the bearing mechanism, and are both capable of ascending or descending relative to the bearing mechanism.

By configuring the tab part guiding mechanism and the housing fixing mechanism to be capable of ascending or descending relative to the bearing mechanism, the tab part guiding mechanism and the housing fixing mechanism can easily move toward the electrode assembly borne on the bearing mechanism. As a result, the housing fixing mechanism can sleeve the housing onto the outer side of the electrode assembly more conveniently, and the tab part guiding mechanism can extend into the accommodating cavity to clamp the tab part more effectively.

In some embodiments, the process of sleeving the housing onto the electrode assembly may include a first stage and a second stage arranged in sequence. In the first stage, the housing fixing mechanism and the tab part guiding mechanism are configured to be capable of descending together relative to the bearing mechanism, thereby enabling the tab part guiding mechanism to come into contact with the tab part in the accommodating cavity. In the second stage, the housing fixing mechanism is configured to be capable of descending relative to the tab part guiding mechanism, such that the tab part guiding mechanism guides the tab part to extend out of the accommodating cavity from the through hole.

With the above arrangement, after the tab part guiding mechanism can come into contact with the tab part in the accommodating cavity in the first stage, the housing fixing mechanism further descends relative to the tab part guiding mechanism, thereby enabling the tab part guiding mechanism to be stationary relative to the tab part in the second stage. In this case, when the housing fixing mechanism further drives the housing to descend, the tab part guiding mechanism can guide the tab part to extend into the through hole. As a result, the tab part is less likely to come into contact with the housing in the second stage, thereby preventing the housing from being blocked from sleeving onto the electrode assembly or the tab part from bending or deforming. This can improve the efficiency of inserting the electrode assembly into the housing, thereby improving the yield rate of the battery.

In some embodiments, before the first stage, the tab part guiding mechanism is configured to be capable of descending relative to the housing fixing mechanism in the preset assembly direction, to extend into the accommodating cavity from a side of the housing via the through hole, and to descend relative to the bearing mechanism together with the housing fixing mechanism in the first stage.

By allowing the tab part guiding mechanism to extend into the accommodating cavity before the housing is sleeved onto the electrode assembly, the tab part guiding mechanism can easily come into contact with the tab part in the accommodating cavity after the housing is sleeved onto the electrode assembly, so as to guide the tab part to extend into the through hole, thereby improving the assembly efficiency of the battery.

In some embodiments, the housing fixing mechanism is slidably arranged on the frame, so as to be capable of ascending, or ascending or descending relative to the bearing mechanism, and the tab part guiding mechanism is slidably connected to the housing fixing mechanism, so as to be capable of ascending, or ascending or descending relative to the bearing mechanism.

By arranging the tab part guiding mechanism to be slidably connected to the housing fixing mechanism, the movement of the tab part guiding mechanism relative to the housing fixing mechanism can be facilitated, and the housing fixing mechanism and the tab part guiding mechanism can be enabled to have a floating function. This enables the housing fixing mechanism and the tab part guiding mechanism to be capable of moving relative to each other toward or away from the electrode assembly on the bearing mechanism, thereby facilitating the assembly of the housing, guiding the tab part to extend into the through hole, and improving the assembly efficiency of the battery.

In some embodiments, the housing assembly mechanism includes a first lifting driving mechanism, the housing fixing mechanism includes a first support frame and a fixing execution mechanism, the first support frame is slidably arranged on the frame, the first lifting driving mechanism is arranged on the frame and configured to drive the first support frame to ascend or descend relative to the frame, the fixing execution mechanism is arranged on the first support frame, and the fixing execution mechanism is configured to fix the housing. The housing assembly mechanism includes a second lifting driving mechanism, the tab part guiding mechanism includes a second support frame and a guiding execution mechanism, the second support frame is slidably arranged on the first support frame, the second lifting driving mechanism is arranged on the first support frame and configured to drive the second support frame to ascend or descend relative to the first support frame, the guiding execution mechanism is arranged on the second support frame, and the guiding execution mechanism is configured to come into contact with and guide the tab part.

By arranging the second support frame and the guiding execution mechanism on the first support frame, when the first lifting driving mechanism drives the first support frame, the first support frame can be enabled to simultaneously move the tab part guiding mechanism and the fixing execution mechanism configured to fix the housing. The second support frame can move relative to the first support frame and the fixing execution mechanism under the drive of the second lifting driving mechanism, thereby enabling the guiding execution mechanism and the fixing execution mechanism to move in coordination with each other to guide the tab part to extend into the through hole when the electrode assembly is assembled into the housing. As a result, the assembly efficiency of the battery is improved.

In some embodiments, the housing assembly mechanism includes a guiding and positioning mechanism. The guiding and positioning mechanism is slidably arranged on the frame, so as to be capable of ascending or descending relative to the frame. The housing fixing mechanism is slidably connected to the guiding and positioning mechanism, so as to be capable of ascending or descending relative to the guiding and positioning mechanism. The guiding and positioning mechanism is configured to position and align the housing and the electrode assembly before the housing is sleeved onto the electrode assembly, and is configured to guide the relative movement between the electrode assembly and the housing when the housing is sleeved onto the electrode assembly.

By providing the guiding and positioning mechanism to position the housing and the electrode assembly, the electrode assembly can be enabled to be aligned with the housing when being inserted into the housing, thereby achieving the precise insertion of the electrode assembly into the housing and improving the assembly efficiency of the battery.

In some embodiments, the housing assembly mechanism includes a third lifting driving mechanism. The guiding and positioning mechanism includes a third support frame and a positioning execution mechanism. The third support frame is slidably arranged on the frame. The third lifting driving mechanism is arranged on the frame and configured to drive the third support frame to ascend or descend relative to the frame. The positioning execution mechanism is arranged on the third support frame. The positioning execution mechanism is configured to position and align the housing and the electrode assembly, and guide the relative movement between the electrode assembly and the housing.

By arranging the positioning execution mechanism on the third support frame, and driving the third support frame to drive the positioning execution mechanism to move relative to the frame using the third lifting driving mechanism, the positioning execution mechanism can be enabled to move relative to the bearing mechanism on the frame. By separating the driving mechanism of the positioning execution mechanism from the driving mechanism of the housing, the positioning execution mechanism can be enabled to move relative to the housing, thereby ensuring more effective coordinated movement between the positioning execution mechanism and the housing, effectively positioning and aligning the housing and the electrode assembly, and effectively guiding the housing and the electrode assembly, so as to achieve the precise insertion of the electrode assembly into the housing.

In some embodiments, the housing assembly mechanism includes a guiding and positioning mechanism. The guiding and positioning mechanism is arranged between the housing fixing mechanism and the bearing mechanism. The guiding and positioning mechanism is configured to position and align the housing and the electrode assembly before the housing is sleeved onto the electrode assembly.

By arranging the guiding and positioning mechanism between the housing fixing mechanism and the bearing mechanism to simultaneously position and align the housing and the electrode assembly, not only can the housing and the electrode assembly be positioned and guided at the moment when the electrode assembly is inserted into the housing to achieve the precise insertion of the electrode assembly into the housing, but also can the elements of the housing insertion apparatus be simplified, thereby reducing the cost of the housing insertion apparatus and improving the assembly efficiency of the battery.

In some embodiments, the guiding and positioning mechanism is configured to guide the relative movement between the electrode assembly and the housing in the preset assembly direction during the process of sleeving the housing onto the electrode assembly.

By guiding the movement between the electrode assembly and the housing during the process of sleeving the housing onto the electrode assembly using the guiding and positioning mechanism, the positions of the housing and the electrode assembly can be enabled to be less likely to shift during the process of sleeving the housing onto the electrode assembly. As a result, mutual obstruction or jamming during the process of sleeving the housing onto the electrode assembly is less likely to occur, thereby more effectively achieving the precise insertion of the electrode assembly into the housing.

In some embodiments, the housing fixing mechanism and the guiding and positioning mechanism are configured to be capable of moving relative to each other in the preset assembly direction, and the housing fixing mechanism can descend relative to the guiding and positioning mechanism, such that the guiding and positioning mechanism positions the housing. The housing fixing mechanism and the guiding and positioning mechanism are configured to descend together relative to the bearing mechanism after the guiding and positioning mechanism positions the housing, such that the guiding and positioning mechanism positions the electrode assembly.

By positioning the housing fixing mechanism using the guiding and positioning mechanism, the position of the housing can be relatively fixed, such that the electrode assembly is less likely to collide with the housing, which may cause the housing to displace, when being inserted into the housing subsequently. The guiding and positioning mechanism positions the housing and then descends together with the housing relative to the bearing mechanism, such that the guiding and positioning mechanism positions the electrode assembly to help the electrode assembly enter the housing. As a result, the process of inserting the electrode assembly into the housing is more precise, thereby improving the assembly efficiency of the battery.

In some embodiments, the guiding and positioning mechanism includes a positioning and guiding plate, the positioning and guiding plate is located between the housing fixing mechanism and the bearing mechanism, a positioning hole penetrating in the preset assembly direction is formed in the positioning and guiding plate, and the positioning hole is configured to position and align the housing and the electrode assembly.

Positioning and aligning the housing and the electrode assembly using the positioning and guiding plate can enable the positioning process to be simpler and more convenient, thereby reducing the difficulty in manufacturing the battery, simplifying the housing insertion apparatus, and reducing the cost.

In some embodiments, the guiding and positioning mechanism includes a positioning driving mechanism, the positioning and guiding plate includes at least two guiding plates, the positioning driving mechanism is in transmission connection to the at least two guiding plates, so as to be capable of driving the at least two guiding plates to fit together or separate from each other in a direction perpendicular to the preset assembly direction, and the at least two guiding plates are fitted together to define the positioning hole in an enclosing manner.

With the above arrangement, the guiding plates can be enabled to move more flexibly, thereby helping them fit together to form the positioning hole before the electrode assembly is inserted into the housing. After the electrode assembly is inserted into the housing, the at least two guiding plates can also be separated from each other in the direction perpendicular to the preset assembly direction, such that the guiding plates are less likely to block the housing and the electrode assembly from moving in other directions, thereby enabling the bearing mechanism to drive the electrode assembly and the housing to leave the housing insertion station and enter other processing stations, so as to improve the overall assembly efficiency of the battery.

In some embodiments, the positioning driving mechanism is configured to drive the at least two guiding plates to fit together when the housing fixing mechanism descends relative to the guiding and positioning mechanism to a preset position, so as to be capable of positioning the housing through the positioning hole. The at least two guiding plates can descend together with the housing fixing mechanism after being fitted together, so as to be capable of positioning the electrode assembly through the positioning hole.

By driving the at least two guiding plates to fit together when the housing fixing mechanism descends to the preset position, the guiding and positioning mechanism can form a positioning hole between the housing fixing mechanism and the electrode assembly, such that before the housing clamped by the housing fixing mechanism descends to be sleeved onto the electrode assembly, the housing first pass through the positioning hole, thereby helping the positioning hole position the housing. Then, the guiding plates descend together with the housing to position the electrode assembly, thereby improving the efficiency of inserting the electrode assembly into the housing.

In some embodiments, each guiding plate is provided with a part of a hole wall configured to enclose the positioning hole, the part of the hole wall includes a first hole wall section and a second hole wall section connected in the preset assembly direction, and an abutment edge part is formed at the junction between the first hole wall section and the second hole wall section. When the at least two guiding plates are fitted together, abutment edge parts of the guiding plates are fitted together to form a bearing platform surface facing the housing fixing mechanism, and the bearing platform surface is configured to abut against the open end of the housing, so as to be capable of positioning the housing. The positioning hole is configured to allow the electrode assembly to be provided in the positioning hole in a penetrating manner from another side of the at least two guiding plates facing away from the bearing platform surface, so as to be capable of positioning the electrode assembly.

By providing the abutment edge part, the guiding and positioning mechanism can easily position the housing, thereby improving the accuracy and efficiency of inserting the electrode assembly into the housing.

In some embodiments, the positioning driving mechanism is configured to drive the at least two guiding plates to separate from each other after the tab part guiding mechanism comes into contact with the tab part, so as to remove the stop of the bearing platform surface against the open end, thereby enabling the housing fixing mechanism to further sleeve the housing onto the electrode assembly.

By configuring the positioning driving mechanism to drive the at least two guiding plates to separate from each other after the tab part guiding mechanism comes into contact with the tab part, the positioning driving mechanism can still position the housing and the electrode assembly during the process in which the tab part guiding mechanism comes into contact with the tab part, thereby relatively fixing the housing and the electrode assembly and helping the tab part guiding mechanism come into contact with the tab part. The arrangement of driving the at least two guiding plates to separate from each other after the tab part guiding mechanism comes into contact with the tab part can prevent the at least two guiding plates from interfering with the housing fixing mechanism that clamps the housing, thereby enabling the housing to be smoothly sleeved onto the electrode assembly to complete the step of inserting the electrode assembly into the housing.

In some embodiments, both sides of the positioning and guiding plate are provided with inclined guiding surfaces, respectively, and the inclined guiding surfaces converge toward a direction close to the positioning hole, so as to guide the open end and the electrode assembly to move into the positioning hole.

By providing the inclined guiding surfaces, the housing and the electrode assembly can be guided, thereby helping the housing and the electrode assembly move into the positioning hole, such that the positioning and guiding plate can position, and position and guide the housing and the electrode assembly.

In some embodiments, the bearing mechanism includes a bearing clamp and a clamp driving mechanism, and the bearing clamp is connected to the clamp driving mechanism. The bearing clamp is configured to clamp the electrode assembly, and the clamp driving mechanism is configured to drive the bearing clamp to switch between a clamped state and an unclamped state. The clamp driving mechanism is configured to drive the bearing clamp to switch to the unclamped state during the process of sleeving the housing onto the electrode assembly, so as to form a clearance for the housing fixing mechanism.

By using the bearing clamp to clamp the electrode assembly, the electrode assembly and the bottom cover can be fixed, such that when the electrode assembly and the electrode assembly are sleeved with the housing, the electrode assembly is less likely to displace or even fall off. In addition, the clamp driving mechanism is configured to drive the bearing clamp to be in the unclamped state during the process of sleeving the housing onto the electrode assembly, such that the clamp driving mechanism is less likely to interfere with the housing, thereby preventing the housing driving mechanism from being capable of smoothly sleeving the housing onto the electrode assembly.

In some embodiments, the housing fixing mechanism is configured to clamp the housing, and the tab part guiding mechanism is configured to clamp the tab part, so as to clamp the tab part and guide the tab part to extend into the through hole.

By clamping the housing and clamping the tab part, the fixation of the housing and the tab part can be facilitated, the assembly process of the battery is enabled to be simpler, and the assembly device is simplified.

In a second aspect, the present application provides a battery assembly system. The battery assembly system includes the housing insertion apparatus as described above.

In some embodiments, the battery assembly system further includes a conveying device and an assembly device, and the conveying device is configured to convey structures to be assembled to stations of the assembly device. The stations of the assembly device include the housing insertion apparatus and at least further include a tab part welding apparatus, a tab part-through apparatus, a post terminal welding apparatus, and a bottom cover welding apparatus.

The tab part welding apparatus is configured to weld a plurality of tab parts of the electrode assembly to form the tab part. The housing insertion apparatus is configured to assemble the electrode assembly into the housing from the open end. The tab part-through apparatus is configured to clamp the tab part to pass through the through hole when the electrode assembly is inserted into the housing. The post terminal welding apparatus is configured to weld the tab part that passes through the through hole to the side of the post terminal facing away from the accommodating cavity. The bottom cover welding apparatus is configured to weld the bottom cover to the open end of the housing.

By arranging the housing insertion apparatus in the battery assembly system, the tab part can be enabled to smoothly extend out of the housing, thereby achieving the precise insertion of the electrode assembly into the housing, reducing the difficulty of the battery manufacturing process, and improving the assembly efficiency and the yield rate of the battery.

In a third aspect, the present application provides an assembly method for a battery. The battery includes a housing and an electrode assembly. The housing is provided with an open end, a wall of the housing opposite to the open end is provided with a post terminal, the post terminal is provided with a through hole, and the housing and the bottom cover are connected to form an accommodating cavity in communication with the through hole. An active substance-coated part of the electrode assembly is arranged in the housing, and a tab part of the electrode assembly passes through the through hole and is connected to a side of the post terminal facing away from the accommodating cavity.

The assembly method includes: separately fixing the housing and the electrode assembly; controlling the housing to descend relative to the electrode assembly, thereby sleeving the housing onto the electrode assembly through the open end during the descent; and guiding the tab part to extend out of the accommodating cavity from the through hole during the process of sleeving the housing onto the electrode assembly.

During the process of sleeving the housing onto the electrode assembly, the housing insertion apparatus can guide the tab part to extend into the through hole, such that the tab part is less likely to block the housing from being sleeved onto the electrode assembly, thereby achieving the precise insertion of the electrode assembly into the housing, and improving the assembly efficiency and the yield rate of the battery.

In some embodiments, before controlling the housing to descend relative to the electrode assembly in a preset direction, the method includes: extending into the accommodating cavity from a side of the housing via the through hole.

Guiding the tab part to extend out of the accommodating cavity from the through hole includes: coming into contact with the tab part and guiding the tab part to extend out of the accommodating cavity from the through hole during the process of sleeving the housing onto the electrode assembly.

With the above arrangement, before the housing is sleeved onto the electrode assembly, the housing insertion apparatus can extend into the accommodating cavity from a side of the housing via the through hole in preparation for clamping and guiding the tab part. During the process of sleeving the housing into the electrode assembly, the housing insertion apparatus comes into contact with the tab part and guides the tab part to extend out of the accommodating cavity from the through hole, thereby reducing the contact between the tab part and the housing. As a result, the tab part is less likely to come into contact with the housing in the second stage, thereby preventing the housing from being blocked from sleeving onto the electrode assembly or the tab part from bending or deforming. This can improve the efficiency of sleeving the electrode assembly into the housing.

In some embodiments, during the process of sleeving the housing onto the electrode assembly, coming into contact with the tab part and guiding the tab part to extend out of the accommodating cavity from the through hole includes: coming into contact with the tab part in the accommodating cavity in a first stage; controlling the housing to descend relative to the tab part and guiding the tab part to extend out of the accommodating cavity from the through hole in a second stage.

With the above arrangement, after the tab part is brought into contact with in the accommodating cavity, the housing can descend relative to the tab part guiding mechanism in the preset assembly direction, so as to be capable of guiding the tab part to extend out of the accommodating cavity from the through hole and complete the process of inserting the electrode assembly into the housing, thereby improving the efficiency of inserting the electrode assembly into the housing, and improving the yield rate of the battery.

In some embodiments, the assembly method further includes: welding the tab part to the post terminal.

With the above arrangement, when the battery is assembled, the tab part of the electrode assembly is welded to the post terminal on the housing, which can not only achieve the electrical connection between the tab part and the post terminal, but also can ensure the reliability and stability of the connection between the tab part and the post terminal.

In some embodiments, the battery further includes a post terminal cover plate. The assembly method further includes: welding the post terminal cover plate to the post terminal, thereby enabling the post terminal cover plate to close the through hole.

With the above arrangement, the post terminal cover plate is arranged on the battery, and the post terminal cover plate is lidded onto the through hole, such that the post terminal cover plate and the post terminal coordinate with each other to close the through hole. This can enable the accommodating cavity inside the battery housing to be an airtight environment, such that external impurities and water drops are less likely to enter the accommodating cavity of the battery through the through hole, and material elements of the accommodating cavity are less likely to leak out to the outside through the through hole. In addition, the welding of the post terminal cover plate to the post terminal can enable the post terminal cover plate to be connected to the tab through the post terminal, thereby enabling the energy of the electrode assembly to be transmitted to the outside of the battery through the post terminal and the post terminal cover plate, which have a large surface area, thus improving the charging and discharging efficiency of the battery.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic diagram of an exploded structure of a battery according to some embodiments of the present application;
FIG. 2 is a schematic structural diagram of a housing insertion apparatus according to some embodiments of the present application;
FIG. 3 is a schematic structural diagram of a bearing mechanism according to some embodiments of the present application;
FIG. 4 is a schematic structural diagram of a housing assembly mechanism according to some embodiments of the present application;
FIG. 5 is a schematic diagram of a front structure of a housing assembly mechanism according to some embodiments of the present application;
FIG. 6 is a schematic diagram of an exploded structure of a housing assembly mechanism according to some embodiments of the present application;
FIG. 7 is a schematic structural diagram of a guiding and positioning mechanism according to some embodiments of the present application;
FIG. 8 is a proportionally enlarged schematic diagram of region Q in the guiding and positioning mechanism shown in FIG. 7;
FIG. 9 is a schematic diagram of a cross-sectional structure of the component positioning and guiding plate along the sectional line C-C shown in FIG. 8;
FIG. 10 is another schematic structural diagram of a bearing mechanism according to some embodiments of the present application; and
FIG. 11 is a schematic flowchart of an assembly method for a battery according to some embodiments of the present application.

Reference numerals in the detailed description are as follows:
vehicle 1000;
battery 1, housing 10, electrode assembly 20, accommodating cavity 11, open end 12, top part 13, through hole 14, tab part 21, post terminal 15, bottom cover 30, post terminal cover plate 40;
housing insertion apparatus 2, housing assembly mechanism 200, bearing mechanism 300, housing fixing mechanism 210, tab part guiding mechanism 220, frame 230, first lifting driving mechanism 240, first support frame 211, fixing execution mechanism 212, second lifting driving mechanism 250, second support frame 221, guiding execution mechanism 222, guiding and positioning mechanism 260, third lifting driving mechanism 270, third support frame 261, positioning execution mechanism 262, positioning and guiding plate 263, positioning hole 264, positioning driving mechanism 265, guiding plate 2631, first hole wall section 2632, second hole wall section 2633, abutment edge part 2634, bearing platform surface 2635, inclined guiding surface 2636, conveyor line 310, bearing clamp 320, and clamp driving mechanism 330.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "have", and any variations thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technologies, batteries are being applied to an increasing number of fields, and gradually replacing traditional fossil energy in the field of automotive power. The battery can store chemical energy and controllably convert the chemical energy to electric energy. For a recyclable battery, it can continue to be used by activating an active substance through charging after discharging.

A battery refers to an apparatus that can convert chemical energy into electric energy, typically housed in a cup, a tank, or other containers, or a part of a composite container that contains an electrolyte solution and metal electrodes to generate an electric current. Thanks to advances in science and technology, batteries offering advantages such as portability, ease of charging and discharging operations, and stable long-term power supply are widely used in fields such as automobiles, household appliances, and aerospace.

The tab part of the battery is a metal conductor that leads the positive electrode and the negative electrode from the battery cell to the housing. Therefore, during the assembly of the battery, the tab part of the battery needs to be led out from the housing to serve as a contact point when the battery is charged and discharged. However, during the assembly of the battery, when the battery cell of the battery is assembled into the housing, the tab part is easily bent inside the housing and cannot extend out of the housing. This results in a relatively high difficulty in the battery's assembly and manufacturing process, and a low yield rate in battery manufacturing.

To achieve the precise insertion of the electrode assembly into the housing and to smoothly extend the tab part from inside the housing to the outside, the tab part can be guided during the insertion of the electrode assembly into the housing, such that the tab part is smoothly extended from inside the housing to the outside.

Based on the above considerations, the present application provides a housing insertion apparatus and assembly method for a battery. During the descent of a housing fixing mechanism, the housing can be sleeved onto the electrode assembly through an open end. Moreover, during the process of sleeving the housing onto the electrode assembly, the tab part guiding mechanism can guide the tab part to extend into the through hole. This design ensures that during the insertion of the electrode assembly of the battery into the housing, the tab part of the battery can be guided to pass through the through hole, such that the tab part is less likely to block the housing from being sleeved onto the electrode assembly, thereby achieving the precise insertion of the electrode assembly into the housing, and improving the assembly efficiency and the yield rate of the battery.

Illustratively, an exemplary description of a battery is provided below.

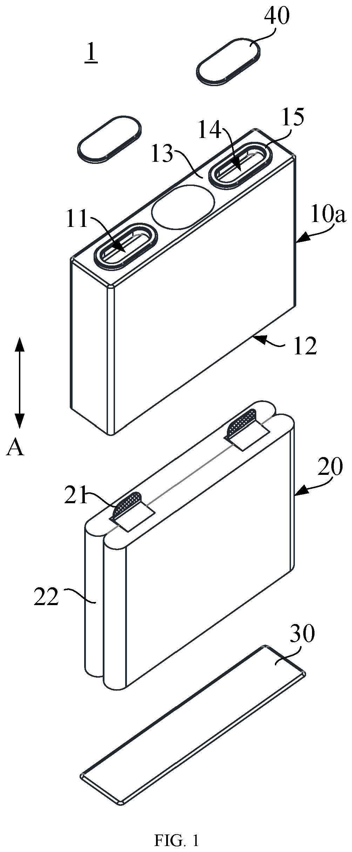

As shown in FIG. 1, the battery 1 may be an energy storage device. The energy storage device includes an energy storage container, an energy storage electrical cabinet, and the like.

In some embodiments, the battery 1 may include a housing 10, a bottom cover 30, and an electrode assembly 20. The battery 1 may further include other functional components.

In some embodiments, the housing 10 is configured to encapsulate components such as the electrode assembly 20 and the electrolyte.

The housing 10 may be provided with an open end 12, a wall of the housing 10 opposite to the open end 12 may be provided with a post terminal 15, the post terminal 15 may be provided with a through hole 14, and the housing 10 and the bottom cover 30 may be connected to form an accommodating cavity 11 in communication with the through hole 14. An active substance-coated part of the electrode assembly 20 may be arranged in the housing 10, and a tab part 21 of the electrode assembly 20 passes through the through hole 14 and is connected to a side of the post terminal 15 facing away from the accommodating cavity 11.

The bottom cover 30 may be lidded onto the open end 12 of the housing 10 to isolate the internal environment of the battery 1 from components of the external environment. Without limitation, the shape of the bottom cover 30 may be adapted to the shape of the open end 12 to fit the housing 10. Optionally, the bottom cover 30 may be made of a material with a certain hardness and strength (for example, an aluminum alloy). In this way, the bottom cover 30 is less likely to deform when being squeezed or collided. This enables the battery 1 to have higher structural strength, and the safety performance can also be improved.

In some embodiments, a top part 13 of the housing 10 may be provided with components such as the post terminal 15. The post terminal 15 may be configured to be electrically connected to the electrode assembly 20 to output or input the electric energy of the battery 1. In some embodiments, the housing 10 may also be provided with a pressure relief mechanism for releasing the internal pressure when the internal pressure or temperature of the battery 1 reaches a threshold.

The housing 10 is a component configured to form the internal environment of the battery 1 in combination with the bottom cover 30. The formed internal environment may be used to accommodate the electrode assembly 20, electrolytic solution, and other components. The housing 10 and the bottom cover 30 may be independent components. An open end 12 may be formed in the housing 10, and the bottom cover 30 is lidded onto the open end 12 at the open end 12 to form the internal environment of the battery 1. In other embodiments, the shape of the housing 10 may be determined based on the specific shape and dimension of the electrode assembly 20. The housing 10 may be made of various materials, including but not limited to copper, iron, aluminum, stainless steel, aluminum alloy, plastic, and the like.

The electrode assembly 20 is a component where the electrochemical reaction occurs in the battery 1. One or more electrode assemblies 20 may be accommodated in the housing 10.

In some embodiments, the electrode assembly 20 is provided with the tab part 21. The tab part 21 can conduct current out from the electrode assembly 20. The tab part 21 includes a positive electrode tab part and a negative electrode tab part. The positive electrode tab part and the negative electrode tab part may be located together at one end of the main body part or separately at two ends of the main body part. During the charging and discharging of the battery, the positive electrode active substance and the negative electrode active substance react with the electrolytic solution, and the tab parts 21 are connected to the post terminals 15 to form a current circuit.

In some embodiments, the electrode assembly 20 includes a positive electrode, a negative electrode, and a separator. During the charging and discharging of the battery, active ions (such as lithium ions) are intercalated and deintercalated back and forth between the positive electrode and the negative electrode. The separator is arranged between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite to each other in the thickness direction thereof, and the positive electrode active material is arranged on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn2O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.3}Co_{0.2}Mn_{0.3}O₂ (also referred to as NCM₅₂₃), LiNi_{0.3}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.13}Al_{0.03}O₂), and modified compounds thereof.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material substrate and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material arranged on at least one surface of the negative electrode current collector.

As an example, the negative electrode current collector has two surfaces opposite to each other in the thickness direction thereof, and the negative electrode active material is arranged on either or both of the two opposite surfaces of the negative electrode current collector.

As an example, the negative electrode active material may be a negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly 20 further includes a separator arranged between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene difluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is arranged between the positive electrode and the negative electrode, serving both to transport ions and to isolate the positive electrode and the negative electrode.

In some embodiments, the battery 1 further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of dimethoxyethane, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 20 is of a wound structure. The positive electrode plate and the negative electrode plate are wound to form a wound structure.

In some embodiments, the electrode assembly 20 and the housing 10 are assembled by the housing insertion apparatus 2 to form the battery 1.

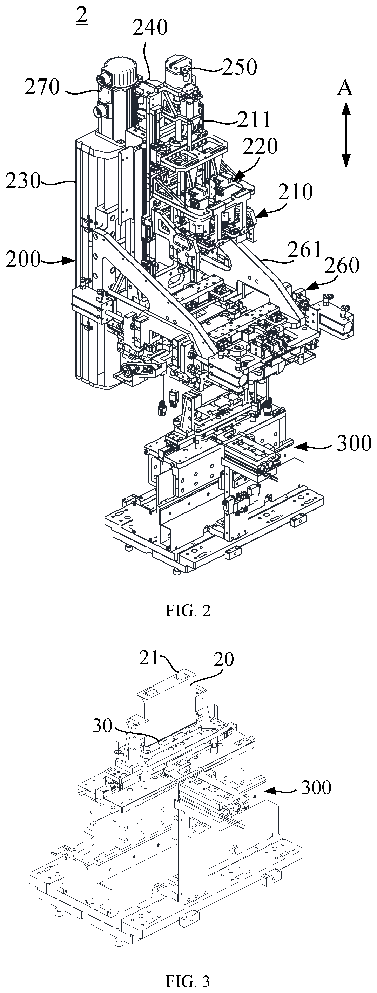

Referring to FIG. 2, in the present application, an exemplary description of the housing insertion apparatus 2 of the battery 1 is provided below. The housing insertion apparatus 2 may be configured to assemble the electrode assembly 20 into the housing 10 from the open end 12.

As shown in FIG. 2, the housing insertion apparatus 2 may comprise a frame 230, a housing assembly mechanism 200, and a bearing mechanism 300.

The bearing mechanism 300 may be arranged on the frame 230 and configured to bear the bottom cover 30 and the electrode assembly 20 supported above the bottom cover 30.

The housing assembly mechanism 200 may be arranged on the frame 230 and may include a housing fixing mechanism 210 and a tab part guiding mechanism 220. The housing fixing mechanism 210 is configured to fix the housing 10, and the tab part guiding mechanism 220 and the housing fixing mechanism 210 are both capable of moving toward or away from the bearing mechanism 300.

Optionally, as shown in FIGs. 2 and 3, the electrode assembly 20 and the bottom cover 30 may be stacked in sequence on the bearing mechanism 300 according to a preset assembly direction, thereby enabling the bottom cover 30 to be lidded onto the open end 12 after the electrode assembly 20 is inserted into the housing. The bearing mechanism 300 may also further fix the electrode assembly 20 and the bottom cover 30 to reduce the displacement of the electrode assembly 20 during transportation or insertion into the housing.

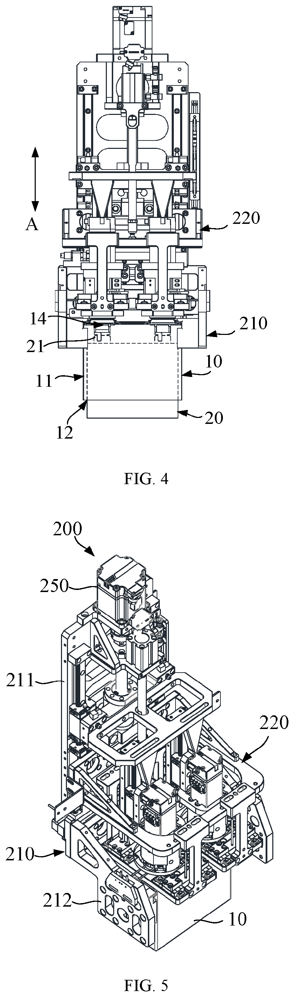

As shown in FIGs. 2 to 4, the housing fixing mechanism 210 may be configured to be capable of sleeving the housing 10 over the outer side of the electrode assembly 20 via the open end 12 when moving toward the bearing mechanism 300. The tab part guiding mechanism 220 may be configured to guide the tab part 21 to extend out of the accommodating cavity 11 from the through hole 14 when the housing 10 is sleeved over the electrode assembly 20.

With the above arrangement, when the housing fixing mechanism 210 drives the housing 10 to sleeve onto the electrode assembly 20, the tab part guiding mechanism 220 can guide the tab part 21 to extend out of the accommodating cavity 11 from the through hole 14. This design ensures that during the insertion of the electrode assembly 20 of the battery 1 into the housing, the tab part 21 of the battery 1 can be smoothly guided to extend out of the accommodating cavity 11 from the through hole 14, such that the tab part 21 is less likely to block the housing 10 from being sleeved onto the electrode assembly 20, thereby achieving the precise insertion of the electrode assembly 20 into the housing, and improving the assembly efficiency and the yield rate of the battery 1.

In some embodiments, as shown in FIGs. 2 to 4, the tab part guiding mechanism 220 and the housing fixing mechanism 210 may both be arranged above the bearing mechanism 300, and are both capable of ascending or descending relative to the bearing mechanism 300.

By arranging both the tab part guiding mechanism 220 and the housing fixing mechanism 210 above the bearing mechanism 300, the assembly of the tab can be facilitated. By configuring the tab part guiding mechanism 220 and the housing fixing mechanism 210 to be capable of ascending or descending relative to the bearing mechanism 300, the tab part guiding mechanism and the housing fixing mechanism can easily move toward the electrode assembly 20 borne on the bearing mechanism 300. As a result, the housing fixing mechanism 210 can sleeve the housing 10 onto the outer side of the electrode assembly 20 more conveniently, and the tab part guiding mechanism 220 can extend into the accommodating cavity 11 to clamp the tab part 21 more effectively.

Certainly, in other embodiments, the tab part guiding mechanism 220 and the housing fixing mechanism 210 may both be arranged at other positions of the bearing mechanism 300. For example, the tab part guiding mechanism 220 and the housing fixing mechanism 210 may both be arranged on the left side or right side of the bearing mechanism 300, and the tab part guiding mechanism 220 and the housing fixing mechanism 210 may both move relative to the bearing mechanism 300 so as to move toward or away from the electrode assembly 20 on the bearing mechanism 300.

Optionally, the housing fixing mechanism 210 and the tab part guiding mechanism 220 are configured to be capable of ascending or descending relative to the bearing mechanism 300 in the preset assembly direction, so as to correspondingly move away from or toward the bearing mechanism 300. During the descent, the housing fixing mechanism 210 sleeves the housing 10 onto the electrode assembly 20 through the open end 12. During the process of sleeving the housing 10 onto the electrode assembly 20, the tab part guiding mechanism 220 is configured to guide the tab part 21 to extend out of the accommodating cavity 11 from the through hole 14 when the housing 10 is sleeved onto the electrode assembly 20. The preset assembly direction may be as indicated by arrow A in FIG. 2.

In some embodiments, the housing fixing mechanism 210 may be configured to clamp the housing 10, and the tab part guiding mechanism 220 is configured to clamp the tab part 21, so as to clamp the tab part 21 and guide the tab part 21 to extend out of the accommodating cavity 11 from the through hole 14.

Optionally, the housing fixing mechanism 210 may be configured to clamp the housing 10 above the bearing mechanism 300, such that the housing fixing mechanism 210 does not block the electrode assembly 20 from being inserted into the housing, and is less likely to block the tab part 21 from extending into the through hole 14 of the top part 13 of the housing 10, thereby facilitating the fixation of the housing 10 and the tab part 21, enabling the assembly process of the battery 1 to be simpler, and also simplifying the assembly device.

In some embodiments, the process of sleeving the housing 10 onto the electrode assembly 20 may include a first stage and a second stage arranged in sequence.

In the first stage, the housing fixing mechanism 210 and the tab part guiding mechanism 220 may be configured to be capable of descending together relative to the bearing mechanism 300, thereby enabling the tab part guiding mechanism 220 to come into contact with the tab part 21 in the accommodating cavity 11. In the second stage, the housing fixing mechanism 210 may be configured to be capable of descending relative to the tab part guiding mechanism 220, such that the tab part guiding mechanism 220 guides the tab part 21 to extend out of the accommodating cavity 11 from the through hole 14.

With the above arrangement, after the tab part guiding mechanism 220 comes into contact with the tab part 21, the housing fixing mechanism 210 further descends relative to the tab part guiding mechanism 220, thereby enabling the tab part guiding mechanism 220 to be stationary relative to the tab part 21 in the second stage. In this case, when the housing fixing mechanism 210 further drives the housing 10 to descend, the tab part guiding mechanism 220 can guide the tab part 21 to extend out of the accommodating cavity 11 from the through hole 14. As a result, the tab part 21 is less likely to come into contact with the housing 10 in the second stage, thereby preventing the housing 10 from being blocked from sleeving onto the electrode assembly 20 or the tab part 21 from bending or deforming. This can improve the efficiency of inserting the electrode assembly 20 into the housing, thereby improving the yield rate of the battery 1.

In some embodiments, before the first stage, the tab part guiding mechanism 220 may be configured to be capable of descending relative to the housing fixing mechanism 210 in the preset assembly direction, to extend into the accommodating cavity 11 from a side of the housing 10 via the through hole 14, and to descend relative to the bearing mechanism 300 together with the housing fixing mechanism 210 in the first stage. The preset assembly direction may be as indicated by direction A in FIG. 2.

By allowing the tab part guiding mechanism 220 to extend into the accommodating cavity 11 before the housing 10 is sleeved onto the electrode assembly 20, the tab part guiding mechanism 220 can easily come into contact with the tab part 21 in the accommodating cavity 11 after the housing 10 is sleeved onto the electrode assembly 20, so as to guide the tab part 21 to extend out of the accommodating cavity 11 from the through hole 14, thereby improving the assembly efficiency of the battery 1.

In some embodiments, as shown in FIG. 2, the housing fixing mechanism 210 is slidably arranged on the frame 230, so as to be capable of ascending, or ascending or descending relative to the bearing mechanism 300, and the tab part guiding mechanism 220 is slidably connected to the housing fixing mechanism 210, so as to be capable of ascending, or ascending or descending relative to the housing fixing mechanism 210.

By arranging the ear part guiding mechanism 220 to be slidably connected to the housing fixing mechanism 210, the movement of the tab part guiding mechanism relative to the housing fixing mechanism can be facilitated, and the housing fixing mechanism 210 and the tab part guiding mechanism 220 can be enabled to have a floating function. This enables the housing fixing mechanism 210 and the tab part guiding mechanism 220 to be capable of moving relative to each other toward or away from the electrode assembly 20 on the bearing mechanism 300, thereby facilitating the assembly of the housing 10, guiding the tab part 21 to extend out of the accommodating cavity 11 from the through hole 14, and improving the assembly efficiency of the battery 1.

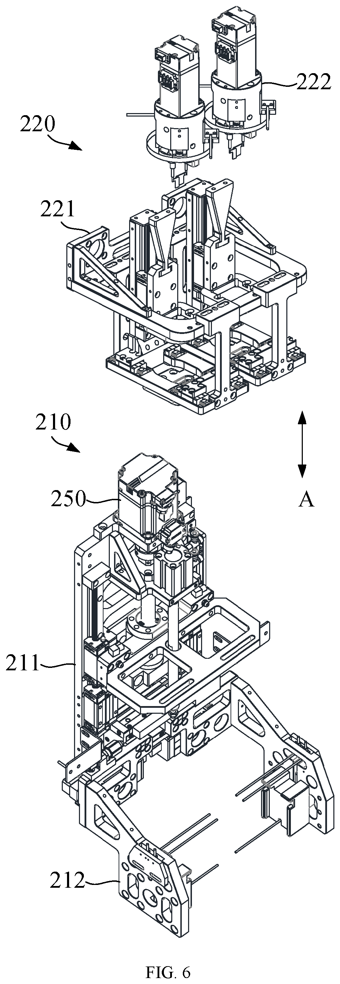

In some embodiments, as shown in FIGs. 2 to 6, the housing assembly mechanism 200 may include a first lifting driving mechanism 240, the housing fixing mechanism 210 may include a first support frame 211 and a fixing execution mechanism 212, the first support frame 211 is slidably arranged on the frame 230, the first lifting driving mechanism 240 is arranged on the frame 230 and configured to drive the first support frame 211 to ascend or descend relative to the frame 230, the fixing execution mechanism 212 is arranged on the first support frame 211, and the fixing execution mechanism 212 is configured to fix the housing 10. The first lifting driving mechanism 240 may be, for example, a cylinder driving mechanism, or may be other apparatuses such as an electric motor.

Optionally, the first lifting driving mechanism 240 may drive the first support frame 211 to ascend or descend relative to the frame 230 in the preset assembly direction. Specifically, when the first lifting driving mechanism 240 drives the first support frame 211 to ascend or descend relative to the frame 230, the first support frame 211 can drive the fixing execution mechanism 212 fixedly clamping the housing 10 with a gauge to ascend or descend relative to the frame 230, thereby enabling the fixing execution mechanism 212 to perform a lifting motion relative to the electrode assembly 20 on the bearing mechanism 300 in the preset assembly direction.

Optionally, as shown in FIGs. 2 to 6, the housing assembly mechanism 200 may include a second lifting driving mechanism 250, the tab part guiding mechanism 220 may include a second support frame 221 and a guiding execution mechanism 222, the second support frame 221 is slidably arranged on the first support frame 211, the second lifting driving mechanism 250 is arranged on the first support frame 211 and configured to drive the second support frame 221 to ascend or descend relative to the first support frame 211, the guiding execution mechanism 222 is arranged on the second support frame 221, and the guiding execution mechanism 222 is configured to come into contact with and guide the tab part 21. The second lifting driving mechanism 250 may be, for example, a cylinder driving mechanism, or may be other apparatuses such as an electric motor.

Optionally, the second lifting driving mechanism 250 may drive the second support frame 221 to ascend or descend relative to the frame 230 in the preset assembly direction. Specifically, when the first support frame 211 ascends or descends relative to the frame 230 under the drive of the first lifting mechanism, the first support frame 211 can drive the tab part guiding mechanism 220 to ascend or descend relative to the frame 230 together, thereby enabling the tab part guiding mechanism 220 to move toward the tab part 21. The second upgrading driving mechanism can drive the second support frame 221 to ascend or descend relative to the first support frame 211 and the fixing execution mechanism 212 on the first support frame 211, thereby enabling the guiding execution mechanism 222 to perform a lifting motion relative to the fixing execution mechanism 212, and thus enabling the guiding execution mechanism 222 to move up to the through hole 14 and enter the accommodating cavity 11 in preparation for clamping the tab part 21.

By arranging the second support frame 221 and the guiding execution mechanism 222 on the first support frame 211, when the first lifting driving mechanism 240 drives the first support frame 211, the first support frame 211 can be enabled to simultaneously move the tab part guiding mechanism 220 and the fixing execution mechanism 212 configured to fix the housing 10. The second support frame 221 can move relative to the first support frame 211 and the fixing execution mechanism 212 under the drive of the second lifting driving mechanism 250, thereby enabling the guiding execution mechanism 222 and the fixing execution mechanism 212 to move in coordination with each other to guide the tab part 21 to extend out of the accommodating cavity 11 from the through hole 14 when the electrode assembly 20 is assembled into the housing 10. As a result, the assembly efficiency of the battery 1 is improved.

In some embodiments, as shown in FIGs. 2 to 8, the housing assembly mechanism 200 may further include a guiding and positioning mechanism 260. The guiding and positioning mechanism 260 is slidably arranged on the frame 230, so as to be capable of ascending or descending relative to the frame 230.

The housing fixing mechanism 210 is slidably connected to the guiding and positioning mechanism 260, so as to be capable of ascending or descending relative to the guiding and positioning mechanism 260. The guiding and positioning mechanism 260 is configured to position and align the housing 10 and the electrode assembly 20 before the housing 10 is sleeved onto the electrode assembly 20, and is configured to guide the relative movement between the electrode assembly 20 and the housing 10 when the housing 10 is sleeved onto the electrode assembly 20.

By providing the guiding and positioning mechanism 260 to position the housing 10 and the electrode assembly 20, the electrode assembly 20 can be enabled to be aligned with the housing 10 when being inserted into the housing, thereby achieving the precise insertion of the electrode assembly 20 into the housing and improving the assembly efficiency of the battery 1.

In some embodiments, as shown in FIG. 2, the housing assembly mechanism 200 may include a third lifting driving mechanism 270. The guiding and positioning mechanism 260 includes a third support frame 261 and a positioning execution mechanism 262. The third support frame 261 is slidably arranged on the frame 230. The third lifting driving mechanism 270 is arranged on the frame 230 and configured to drive the third support frame 261 to ascend or descend relative to the frame 230. The positioning execution mechanism 262 may be arranged on the third support frame 261. The positioning execution mechanism 262 may be configured to position and align the housing 10 and the electrode assembly 20, and guide the relative movement between the electrode assembly 20 and the housing 10. The third lifting driving mechanism 270 may be, for example, a cylinder driving mechanism, or may be other apparatuses such as an electric motor.

By arranging the positioning execution mechanism 262 on the third support frame 261, and driving the third support frame 261 to drive the positioning execution mechanism 262 to ascend or descend relative to the frame 230 using the third lifting driving mechanism 270, the positioning execution mechanism 262 can be enabled to ascend or descend relative to the bearing mechanism 300 on the frame 230, thereby enabling the positioning execution mechanism 262 to position and guide the housing 10 according to the movement of the housing 10, or enabling the positioning execution mechanism to be restored relative to the electrode assembly 20 in preparation for the next guidance.

By separating the driving mechanism of the positioning execution mechanism 262 from the driving mechanism of the housing 10, the positioning execution mechanism 262 can be enabled to move relative to the housing 10, thereby ensuring more effective coordinated movement between the positioning execution mechanism 262 and the housing 10, effectively positioning and aligning the housing 10 and the electrode assembly 20, and effectively guiding the housing and the electrode assembly, so as to achieve the precise insertion of the electrode assembly 20 into the housing.

In some embodiments, the guiding and positioning mechanism 260 may be arranged between the housing fixing mechanism 210 and the bearing mechanism 300. The guiding and positioning mechanism 260 may be configured to position and align the housing 10 and the electrode assembly 20 before the housing 10 is sleeved onto the electrode assembly 20.

By arranging the guiding and positioning mechanism 260 between the housing fixing mechanism 210 and the bearing mechanism 300 to simultaneously position and align the housing 10 and the electrode assembly 20, not only can the housing 10 and the electrode assembly 20 be positioned and guided at the moment when the electrode assembly 20 is inserted into the housing to achieve the precise insertion of the electrode assembly 20 into the housing, but also can the elements of the housing insertion apparatus 2 be simplified, thereby improving the assembly efficiency of the battery 1.

In some embodiments, the guiding and positioning mechanism 260 may be configured to guide the relative movement between the electrode assembly 20 and the housing 10 in the preset assembly direction during the process of sleeving the housing 10 onto the electrode assembly 20.

By guiding the relative movement between the electrode assembly 20 and the housing 10 in the preset assembly direction using the guiding and positioning mechanism 260, the positions of the housing 10 and the electrode assembly 20 can be enabled to be less likely to shift during the process of sleeving the housing 10 onto the electrode assembly 20. As a result, mutual obstruction or jamming during the process of sleeving the housing 10 onto the electrode assembly 20 is less likely to occur, thereby more effectively achieving the precise insertion of the electrode assembly 20 into the housing.

In some embodiments, the housing fixing mechanism 210 and the guiding and positioning mechanism 260 may be configured to be capable of moving relative to each other in the preset assembly direction, and the housing fixing mechanism 210 can descend relative to the guiding and positioning mechanism 260, such that the guiding and positioning mechanism 260 positions the housing 10.

The housing fixing mechanism 210 and the guiding and positioning mechanism 260 are configured to descend together relative to the bearing mechanism 300 after the guiding and positioning mechanism 260 positions the housing 10, such that the guiding and positioning mechanism 260 positions the electrode assembly 20.

Optionally, when the housing fixing mechanism 210 drives the housing 10 to descend relative to the guiding and positioning mechanism 260 and reach the position of the guiding and positioning mechanism 260, the housing 10 can be guided and positioned by the guiding and positioning mechanism 260. Then, the third lifting driving mechanism 270 can drive the guiding and positioning mechanism 260 and the housing fixing mechanism 210 to descend relative to the bearing mechanism 300, such that the electrode assembly 20 is positioned and guided by the guiding and positioning mechanism 260 before moving toward the housing 10 in preparation for insertion into the housing, thereby enabling the electrode assembly 20 to be positioned and aligned with the housing 10. As a result, when the housing fixing mechanism 210 and the guiding and positioning mechanism 260 further descend, the electrode assembly 20 can be precisely inserted into the housing, so as to improve the assembly efficiency of the battery 1.

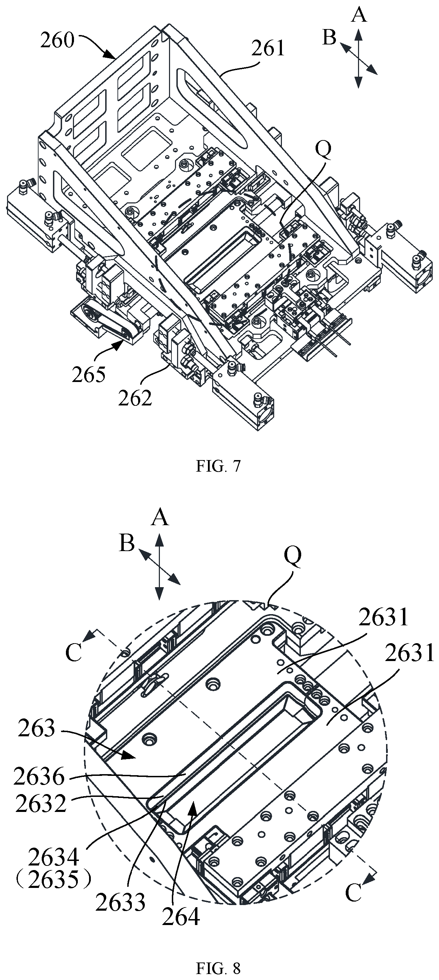

In some embodiments, as shown in FIGs. 7 and 8, the guiding and positioning mechanism 260 may include a positioning and guiding plate 263, the positioning and guiding plate 263 may be located between the housing fixing mechanism 210 and the bearing mechanism 300, a positioning hole 264 penetrating in the preset assembly direction may be formed in the positioning and guiding plate 263, and the positioning hole 264 may be configured to position and align the housing 10 and the electrode assembly 20.

Optionally, the positioning and guiding plate 263 may be adapted to the housing 10, and the positioning hole 264 may be adapted to the electrode assembly 20 in shape, such that the housing 10 is positioned and guided by the positioning and guiding plate 263, and the positioning hole 264 and the positioning and guiding plate 263 can guide the electrode assembly 20. As a result, when the electrode assembly 20 is inserted into the housing, the positioning and guiding plate 263 enables the electrode assembly 20 to be aligned with the housing 10.

In addition, positioning and aligning the housing 10 and the electrode assembly 20 only using the positioning and guiding plate 263 can enable the positioning process to be simpler and more convenient, thereby reducing the difficulty in manufacturing the battery 1, simplifying the housing insertion apparatus 2, and reducing the cost.

In some embodiments, as shown in FIGs. 7 and 8, the guiding and positioning mechanism 260 may include a positioning driving mechanism 265, the positioning and guiding plate 263 may include at least two guiding plates 2631, the positioning driving mechanism 265 is in transmission connection to the at least two guiding plates 2631, so as to be capable of driving the at least two guiding plates 2631 to fit together or separate from each other in a direction perpendicular to the preset assembly direction, and the at least two guiding plates 2631 are fitted together to define the positioning hole 264 in an enclosing manner. The positioning driving mechanism 265 may be, for example, a cylinder driving mechanism, or may be other apparatuses such as an electric motor.

Since the fixing assembly of the housing 10 drives the housing 10 to move relative to the electrode assembly 20 on the bearing mechanism 300 in the preset assembly direction, the at least two guiding plates 2631 are arranged to fit together or separate from each other in the direction perpendicular to the preset assembly direction, thereby enabling the at least two guiding plates 2631 to form a clearance for the housing 10 and the electrode assembly 20 during the movement, and to be less likely to prevent collision with the housing 10 or the electrode assembly 20.

Due to such an arrangement, the guiding plates 2631 can be enabled to move more flexibly, thereby helping them fit together to form the positioning hole 264 before the electrode assembly 20 is inserted into the housing. After the electrode assembly 20 is inserted into the housing, the at least two guiding plates 2631 can also be separated from each other in the direction perpendicular to the preset assembly direction, thereby enabling the bearing mechanism 300 to drive the electrode assembly 20 and the housing 10 to leave the housing insertion station and enter other processing stations, so as to improve the overall assembly efficiency of the battery 1.

In some embodiments, the positioning driving mechanism 265 may be configured to drive the at least two guiding plates 2631 such that they can be fitted together when the housing fixing mechanism 210 descends relative to the guiding and positioning mechanism 260 to a preset position, so as to be capable of positioning the housing 10 through the positioning hole 264. The at least two guiding plates 2631 can descend together with the housing fixing mechanism 210 after being fitted together, so as to be capable of positioning the electrode assembly 20 through the positioning hole 264.

Optionally, the preset position may be set before the housing fixing mechanism 210 drives the housing 10 to descend relative to the guiding and positioning mechanisms 260 to the positions corresponding to the at least two guiding plates 2631, thereby enabling the at least two guiding plates 2631 to be fitted together to form the positioning hole 264 before the housing fixing mechanism 210 drives the housing 10 to reach the positions corresponding to the at least two guiding plates 2631. Then, when the housing fixing mechanism 210 drives the housing 10 to further descend, the housing can be positioned by the at least two guiding plates 2631 and the positioning hole 264. The open end 12 of the housing 10 can be aligned with the positioning hole 264.

Further, after the at least two guiding plates 2631 position the housing 10 through the positioning hole 264, the at least two guiding plates can descend together with the housing fixing mechanism 210 in the preset assembly direction, so as to move toward the electrode assembly 20. The at least two guiding plates 2631 then position the electrode assembly 20 through the positioning hole 264, thereby enabling the electrode assembly 20 to be aligned with the positioning hole 264 and the open end 12 of the housing 10. Then, after the at least two guiding plates 2631 and the housing fixing mechanism 210 further descend, the electrode assembly 20 can further pass through the positioning hole 264 to enter the accommodating cavity 11 of the housing 10 through the open end 12, thereby effectively achieving the precise insertion of the electrode assembly 20 into the housing and improving the assembly efficiency of the battery 1.

Optionally, as shown in FIG. 8, the number of the at least two guiding plates 2631 may be two, and the two guiding plates 2631 may be fitted together or separated from each other in the direction perpendicular to the preset assembly direction. The movement direction of the two guiding plates 2631 may be as indicated by arrow B in FIG. 8.

The two guiding plates 2631 can define the positioning hole 264 in an enclosing manner when being fitted together, and the housing 10 can be guided by the two guiding plates 2631 when the housing fixing mechanism 210 drives the housing to descend, such that the open end 12 of the housing 10 is aligned with the electrode assembly 20. The two guiding plates 2631 may move away from the housing 10 when being separated from each other, thereby enabling the fixing execution mechanism 212 to clamp the housing 10 and continue to sleeve the housing onto the electrode assembly 20, so as to complete the process of inserting the electrode assembly 20 into the housing.

Forming the positioning hole 264 using the two guiding plates 2631 can simplify the housing insertion apparatus 2, reduce the cost of the housing insertion apparatus 2, and also help the positioning driving mechanism 265 control and drive the two guiding plates 2631 to form the positioning hole 264, or to separate from each other and move away from the housing 10.

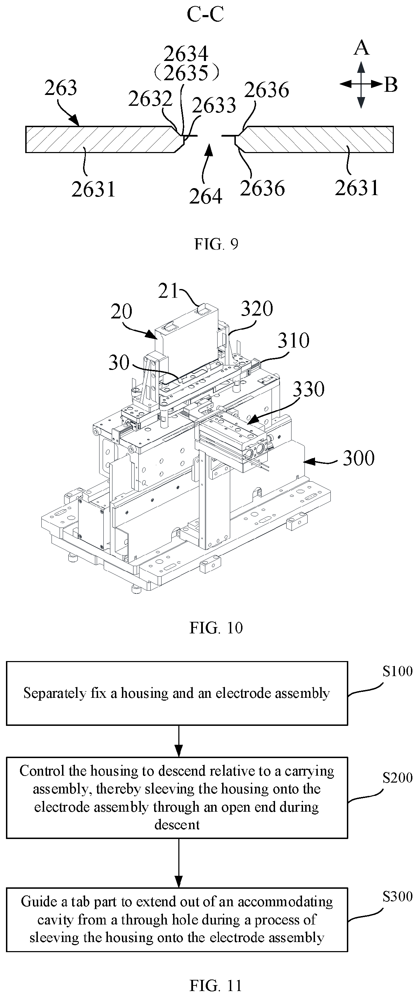

In some embodiments, as shown in FIGs. 8 and 9, each guiding plate 2631 may be provided with a part of a hole wall configured to enclose the positioning hole 264, the part of the hole wall may include a first hole wall section 2632 and a second hole wall section 2633 connected in the preset assembly direction, and an abutment edge part 2634 is formed at the junction between the first hole wall section 2632 and the second hole wall section 2633. When the at least two guiding plates 2631 are fitted together, abutment edge parts 2634 of the guiding plates are fitted together to form a bearing platform surface 2635 facing the housing fixing mechanism 210, and the bearing platform surface 2635 may be configured to abut against the open end 12 of the housing 10, so as to be capable of positioning the housing 10.

The abutment edge part 2634 is arranged on a part of the hole wall enclosing the positioning hole 264 to form the bearing platform surface 2635, thereby enabling the bearing platform surface 2635 to enclose the positioning hole 264, the open end 12 of the housing 10 to be aligned with the positioning hole 264 when the open end 12 abuts against the bearing platform surface 2635, and the housing 10 to be aligned with the electrode assembly 20 under the guiding plate 2631.

Optionally, the positioning hole 264 may be configured to allow the electrode assembly 20 to be provided in the positioning hole 264 in a penetrating manner from another side of the at least two guiding plates 2631 facing away from the bearing platform surface 2635, so as to be capable of positioning the electrode assembly 20.

Specifically, after the open end 12 of the housing 10 abuts against the bearing platform surface 2635, the at least two guiding plates 2631, driven by the positioning driving mechanism 265, descend together with the housing 10 in the preset assembly direction. Then, a side of the positioning hole 264 facing away from the housing 10 moves toward the electrode assembly 20. The electrode assembly 20 may be positioned and guided by the positioning hole 264, and pass through the positioning hole 264, thereby further extending into the accommodating cavity 11 of the housing 10 through the open end 12. As a result, the accuracy and efficiency of inserting the electrode assembly 20 into the housing can be improved.

In some embodiments, the positioning driving mechanism 265 may be configured to drive the at least two guiding plates 2631 to separate from each other after the tab part guiding mechanism 220 comes into contact with the tab part 21, so as to remove the stop of the bearing platform surface 2635 against the open end 12, thereby enabling the housing fixing mechanism 210 to further sleeve the housing 10 onto the electrode assembly 20.

Optionally, when the tab part guiding mechanism 220 comes into contact with the tab part 21, the housing 10 has not been completely sleeved onto the electrode assembly 20. After the tab part guiding mechanism 220 comes into contact with the tab part 21, under the drive of the first lifting driving mechanism 240, the housing 10 moves further in the preset assembly direction toward the direction of the electrode assembly 20 to achieve complete sleeving onto the electrode assembly 20. During this process, the at least two guiding plates 2631 not only stop the open end 12, but also mutually interfere with the bearing mechanism 300 that clamps and fixes the electrode assembly 20. Therefore, by configuring the at least two guiding plates 2631 to be separated from each other after driving, the housing 10 can be enabled to be smoothly sleeved onto the electrode assembly 20, so as to complete the step of inserting the electrode assembly 20 into the housing.

In some embodiments, as shown in FIG. 9, both sides of the positioning and guiding plate 263 may be provided with inclined guiding surfaces 2636, respectively, and the inclined guiding surfaces 2636 converge toward a direction close to the positioning hole 264, so as to guide the open end 12 and the electrode assembly 20 to move into the positioning hole 264.

Specifically, the positioning and guiding plate 263 is separately provided with inclined guiding surfaces 2636 on a side facing the housing 10 and a side facing the bearing mechanism 300 in the preset assembly direction. The inclined guiding surfaces 2636 on both sides may be arranged around the positioning hole 264 and connected to a part of the hole wall of the positioning hole 264. The extending direction of each inclined guiding surface 2636 forms an acute angle with the preset assembly direction, such that the inclined guiding surfaces 2636 converge toward the direction close to the positioning hole 264.

During a process in which the housing 10 moves toward the at least two guiding plates 2631 and comes into contact with the guiding plates 2631, if the housing 10 is initially in the correct place, the open end 12 of the housing 10 may directly abut against the bearing platform surface 2635; if the position of the housing 10 shifts and the open end of the housing is not aligned with the bearing platform surface 2635, the housing 10 may be guided by the inclined guiding surface 2636 after coming into contact with the at least two guiding plates 2631 to position and guide the housing, such that the housing 10 moves into alignment with the bearing platform surface 2635 and the positioning hole 264.

The electrode assembly 20 is also positioned and aligned with the positioning hole 264 through the inclined guiding surface 2636 on the other side of the guiding plate 2631, thereby facilitating the movement of the electrode assembly 20 into the positioning hole 264, so as to complete the step of inserting the electrode assembly 20 into the housing.

In some embodiments, as shown in FIG. 10, the bearing mechanism 300 may include a bearing clamp 320 and a clamp driving mechanism 330, and the clamp driving mechanism 330 is connected to the bearing clamp 320.

The bearing clamp 320 may be configured to clamp the electrode assembly 20, and the clamp driving mechanism 330 may be configured to drive the bearing clamp 320 to switch between a clamped state and an unclamped state. The clamp driving mechanism 330 is configured to drive the bearing clamp 320 to switch to the unclamped state during the process of sleeving the housing 10 onto the electrode assembly 20, so as to form a clearance for the housing fixing mechanism 210.

Further, the bearing clamp 320 may also clamp the bottom cover 30, thereby enabling the electrode assembly 20 and the bottom cover 30 to be relatively fixed after being stacked in sequence. When conveying the bearing clamp 320, a conveyor line 310 may simultaneously drive the conveyance of the electrode assembly 20 and the bottom cover 30 clamped by the bearing mechanism 300, such that during the conveyance of the electrode assembly 20 and the bottom cover 30 by the conveyor line 310, the electrode assembly 20 and the bottom cover 30 are less likely to displace or even fall off.

In addition, the clamp driving mechanism 330 is configured to drive the bearing clamp 320 to be in the unclamped state during the process of sleeving the housing 10 onto the electrode assembly 20, such that the clamp driving mechanism 330 is less likely to interfere with the housing 10, the housing 10 can be smoothly sleeved onto the electrode assembly 20, and the open end 12 of the housing 10 can abut against the bottom cover 30, so as to complete the step of inserting the electrode assembly 20 into the housing.

Optionally, the clamp driving mechanism 330 is configured to drive the bearing clamp 320 to switch to the unclamped state during the process of further sleeving the housing 10 onto the electrode assembly 20 after the tab part guiding mechanism 220 comes into contact with the tab part 21. Due to such an arrangement, during the process in which the tab part guiding mechanism 220 comes into contact with the tab part 21, the bearing clamp 320 still clamps the electrode assembly 20 to further fix the electrode assembly 20, thereby preventing the guiding assembly of the tab part 21 from colliding with the electrode assembly 20, which may cause the displacement of the electrode assembly 20.

Based on the basic structure of the battery 1 and the housing insertion apparatus 2 of the battery 1 described above, the following is an exemplary description of a battery assembly system according to an embodiment of the battery assembly system.

The battery assembly system may include the housing insertion apparatus 2 as described above. The battery assembly system may further include a conveying device and an assembly device. The conveying device may be configured to convey structures to be assembled and the bearing mechanism 300 to stations of the assembly device. The stations of the assembly device may at least include a tab part welding apparatus, a tab part-through apparatus, a post terminal welding apparatus, and a bottom cover welding apparatus.

It should be noted that in this embodiment, the conveying device may include a conveyor line 310. The conveyor line 310 may be a conveying structure formed by motor-driven conveying rollers in coordination with a conveyor belt, or may be a conveying structure formed by motor-driven articulated conveying chain links, or may be an AGV conveying trolley, as long as the conveyor line can achieve conveyance in at least one direction and support the stability of the structures to be assembled.

Optionally, the bearing clamp 320 may be arranged on the conveyor line 310 of the conveying device, and the conveyor line 310 may be configured to convey the bearing clamp 320. The clamp driving mechanism 330 may be arranged on the conveyor line 310. The bearing mechanism 300 is configured to bear the structures to be assembled of the battery 1, the conveyor line 310 and the bearing mechanism 300 may be connected to each other, and the conveyor line 310 may convey the structures to be assembled of the battery and the bearing mechanism 300 together.

The tab part welding apparatus may be configured to weld a plurality of tab plates of the electrode assembly 20 to form the tab part 21. The housing insertion apparatus 2 is configured to assemble the electrode assembly 20 into the housing 10 from the open end 12. The tab part-through apparatus is configured to clamp the tab part 21 to pass through the through hole 14 when the electrode assembly 20 is inserted into the housing 10. The post terminal welding apparatus is configured to weld the tab part 21 that passes through the through hole 14 to the side of the post terminal 15 facing away from the accommodating cavity 11. The bottom cover welding apparatus is configured to weld the bottom cover 30 to the open end 12 of the housing 10.

Specifically, the tab part welding apparatus may be intended to pre-weld the tab plates to form the tab part 21. The tab part welding apparatus is optionally an ultrasonic welding device, as long as the tab part welding apparatus can ensure that the tab plates are welded in a stable clamped state. The housing insertion apparatus may be a pushing mechanism or a clamping mechanism, as long as the housing insertion apparatus can stably move the electrode assembly 20 toward the open end 12 of the housing 10 and allow the electrode assembly to enter the accommodating cavity 11 through the open end 12. Similarly, the tab part-through apparatus may adopt a clamping structure or a guiding structure, as long as the tab part-through apparatus can guide the tab part 21 to smoothly pass through the through hole 14 without interfering with the housing 10. The post terminal welding apparatus is intended to weld the tab part 21 and the post terminal 15, and is optionally a laser welding device. The bottom cover welding apparatus is intended to weld the circumferential edges of the bottom cover 30 and the open end 12 of the housing 10, and is also a laser welding device.

In addition, the assembly device includes, but is not limited to, the tab part welding apparatus, the housing insertion apparatus, the tab part-through apparatus, the post terminal welding apparatus, and the bottom cover welding apparatus. Illustratively, when the number of the electrode assemblies 20 is plural, for example, two electrode assemblies are provided, the assembly device may further include a pairing apparatus. The pairing apparatus may be configured to stack the plurality of electrode assemblies 20, to enable the tab parts of the two electrode assemblies 20 to be substantially opposite to each other. This facilitates the conveyance of the paired electrode assemblies 20, by the conveying structure, to the tab part welding apparatus for welding the tab parts, thereby facilitating the formation of the tab part 21. Further illustratively, to ensure the reliability of the assembly process of the battery 1, dust removal and NG detection stations may further be added between any two adjacent stations. This is not limited in this embodiment.

Taking the above battery 1 embodiment and the housing insertion apparatus 2 of the battery 1 as an example, an exemplary description of an assembly method for the battery 1 is provided below. As shown in FIG. 11, the assembly method includes the following steps:
In step S100, the housing and the electrode assembly are separately fixed.

Optionally, the bottom cover 30 may be placed on the bearing mechanism 300 first, and then the electrode assembly 20 may be placed on the bottom cover 30, such that the electrode assembly 20 and the bottom cover 30 are stacked in sequence in the preset assembly direction, and the tab part 21 of the electrode assembly 20 faces away from the bottom cover 30. Further, the bearing clamp 320 clamps and fixes the electrode assembly 20 and the bottom cover 30, and the conveyor line 310 further conveys the bearing clamp 320, the electrode assembly 20, and the bottom cover 30 together to the housing insertion station corresponding to the housing assembly mechanism 200.

The housing assembly mechanism 200 may drive the fixing execution mechanism 212 on the first support frame 211 through the first lifting driving mechanism 240 to fix the housing 10, and enable the open end 12 of the housing 10 to face the electrode assembly 20 on the bearing mechanism 300 in the preset assembly direction.

In step S200, the housing is controlled to descend relative to the bearing mechanism, thereby sleeving the housing onto the electrode assembly through the open end during the descent.

In some embodiments, before the housing 10 is controlled to descend relative to the bearing mechanism 300, the method includes the following step: extending into the accommodating cavity 11 from a side of the housing 10 via the through hole 14 to clamp the tab part 21.

In some embodiments, the second support frame 221 of the tab part guiding mechanism 220 is first driven by the second lifting driving mechanism 250 to descend relative to the first support frame 211 in the preset assembly direction, thereby enabling the guiding execution mechanism 222 arranged on the second support frame 221 to descend relative to the fixing execution mechanism 212 on the first support frame 211. As a result, the guiding execution mechanism 222 of the tab part guiding mechanism 220 extends into the accommodating cavity 11 from a side of the housing 10 via the through hole 14 in preparation for guiding the tab part 21 to extend into the through hole 14.

Further, in some embodiments, the first lifting driving mechanism 240 drives and controls the housing fixing mechanism 210 and the tab part guiding mechanism 220 to descend relative to the bearing mechanism 300 in the preset assembly direction, so as to drive the housing 10 to move toward the direction of the bearing mechanism 300 in the preset assembly direction.

Then, when the housing fixing mechanism 210 descends relative to the guiding and positioning mechanism 260 to a preset position, the positioning driving mechanism 265 drives the at least two guiding plates 2631 to fit together, so as to form the positioning hole 264. During the further descent of the housing 10, the open end 12 of the housing abuts against the at least two guiding plates 2631 in the guiding and positioning mechanism 260, and the inclined guiding surfaces 2636 on the at least two guiding plates 2631 position and guide the housing 10 component, such that the open end 12 of the housing 10 abuts against the bearing platform surface 2635 to be aligned with the positioning hole 264, and surrounds the positioning hole 264 on a side of the positioning hole 264 facing the housing 10.

Then, in some embodiments, the positioning driving mechanism 265 drives the guiding and positioning mechanism 260 and the housing fixing mechanism 210 to descend together with the housing 10 in the preset assembly direction, so as to move toward the electrode assembly 20. Similarly, during the descent, the electrode assembly 20 is positioned and guided by the inclined guiding surface 2636 on a side of the positioning and guiding plate 263 facing away from the housing 10, thereby enabling the electrode assembly 20 to be provided in the positioning hole 264 in a penetrating manner from the other side of the positioning hole 264 facing away from the housing fixing mechanism 210, and further extend into the accommodating cavity 11 through the open end 12, so as to achieve the precise insertion of the electrode assembly 20 into the housing.

In step S300, the tab part is guided to extend out of the accommodating cavity from the through hole during the process of sleeving the housing onto the electrode assembly.

In some embodiments, during the process of sleeving the housing 10 onto the electrode assembly 20, the tab part 21 is brought into contact with and the tab part 21 is guided to extend out of the accommodating cavity 11 from the through hole 14. Optionally, this step may include the following steps S311 and S312:
In step S311, the tab part is brought into contact with in the accommodating cavity in a first stage.

Optionally, during the process of sleeving the housing 10 onto the electrode assembly 20, when the tab part guiding mechanism 220 moves relative to the tab part 21 to a position where it comes into contact with the tab part, the housing fixing mechanism 210 and the tab part guiding mechanism 220 stop descending, and the tab part guiding mechanism 220 moves to come into contact with and clamp the tab part 21.

In some embodiments, after the tab part guiding mechanism 220 moves to come into contact with and clamp the tab part 21, the positioning driving mechanism 265 drives the at least two guiding plates 2631 to separate from each other in the direction perpendicular to the preset assembly direction to move away from the housing 10, thereby removing the stop of the bearing platform surface 2635 against the open end 12, and enabling the housing fixing mechanism 210 to further sleeve the housing 10 onto the electrode assembly 20.

Optionally, after the tab part guiding mechanism 220 moves to come into contact with and clamp the tab part 21, the clamp driving mechanism 330 can drive the bearing clamp 320 to switch to the unclamped state, such that the bearing clamp 320 moves away from the electrode assembly 20 and the bottom cover 30 to form a clearance for the housing 10 and the driving and fixing mechanism of the housing 10, thereby enabling the housing 10 to be completely sleeved onto the electrode assembly 20 subsequently, and enabling the open end 12 of the housing to smoothly abut against the bottom cover 30.

In step S312, the housing is controlled to descend relative to the tab part in a second stage, such that the tab part guiding mechanism guides the tab part to extend out of the accommodating cavity from the through hole.

Optionally, the first lifting driving mechanism 240 drives the first support frame 211 to drive the housing fixing mechanism 210 to descend relative to the tab part guiding mechanism 220 and the tab part 21 in the preset assembly direction, thereby enabling the housing 10 to descend relative to the tab part guiding mechanism 220 and the tab part 21 in the preset assembly direction. As a result, the tab part guiding mechanism 220 is enabled to guide the tab part 21 to extend out of the accommodating cavity 11 from the through hole 14, the housing 10 is smoothly sleeved onto the electrode assembly 20, and the open end 12 of the housing can smoothly abut against the bottom cover 30, so as to complete the process of inserting the electrode assembly 20 into the housing.

With the above arrangement, after the tab part guiding mechanism 220 can come into contact with the tab part 21 in the accommodating cavity 11, the housing fixing mechanism 210 further descends relative to the tab part guiding mechanism 220 in the preset assembly direction, thereby enabling the tab part guiding mechanism 220 to be stationary relative to the tab part 21 in the second stage. In this case, when the housing fixing mechanism 210 further drives the housing 10 to descend in the preset assembly direction, the tab part guiding mechanism 220 can guide the tab part 21 to extend out of the accommodating cavity 11 from the through hole 14. As a result, the tab part 21 is less likely to come into contact with the housing 10 in the second stage, thereby preventing the housing 10 from being blocked from sleeving onto the electrode assembly 20 or the tab part 21 from bending or deforming. This can improve the efficiency of inserting the electrode assembly 20 into the housing, thereby improving the yield rate of the battery 1.

In some embodiments, the assembly method further includes step S400:
In step S400, the tab part is welded to the post terminal.

Optionally, after the housing 10 is successfully sleeved onto the outside of the electrode assembly 20, the tab part 21 extends out of the accommodating cavity 11 from the through hole, and is opposite to the post terminal 15 in the through hole 14. In this case, the tab part 21 is welded to the post terminal 15, such that the tab part 21 and the post terminal 15 are electrically connected and can form a current circuit together with the electrode assembly 20, thereby enabling the electrode assembly 20 to be connected to the outside through the post terminal 15 and the tab part 21, and realize the charging and discharging functions.

In addition, the welding between the tab part 21 of the electrode assembly 20 and the post terminal 15 on the housing 10 can also ensure the reliability and stability of the connection between the tab part 21 and the post terminal 15.

In some embodiments, as shown in FIG. 1, the battery 1 may further include a post terminal cover plate 40. The assembly method further includes step S500:
In step S500, the post terminal cover plate is welded to the post terminal, thereby enabling the post terminal cover plate to close the through hole.

Optionally, after the tab part 21 is welded to the post terminal 15, the post terminal cover plate 40 may be arranged on a side of the post terminal 15 distal to the housing 10, and the post terminal cover plate 40 is welded to the post terminal 15, thereby enabling the post terminal cover plate 40 to close the through hole 14, and enclose the accommodating cavity 11 together with the housing 10 to form a closed space. Due to such an arrangement, substances such as external impurities and water drops are less likely to enter the accommodating cavity 11 of the battery through the through hole 14, and material elements of the accommodating cavity 11 are less likely to leak out to the outside through the through hole 14.

In addition, the welding of the post terminal cover plate 40 to the post terminal 15 can enable the post terminal cover plate 40 to be connected to the tab part 21 through the post terminal 15, thereby enabling the energy of the electrode assembly 20 to be transmitted to the outside of the battery 1 through the post terminal 15 and the post terminal cover plate 40, which have a large surface area, thus improving the charging and discharging efficiency of the battery 1.

In a first aspect, as shown in FIGs. 1 to 10, the present application provides a housing insertion apparatus 2 for a battery 1. A housing 10 may be provided with an open end 12, a wall of the housing 10 opposite to the open end 12 may be provided with a post terminal 15, the post terminal 15 may be provided with a through hole 14, and the housing 10 and a bottom cover 30 may be connected to form an accommodating cavity 11 in communication with the through hole 14. An active substance-coated part of the electrode assembly 20 may be arranged in the housing 10, and a tab part 21 of the electrode assembly 20 passes through the through hole 14 and is connected to a side of the post terminal 15 facing away from the accommodating cavity 11. The housing insertion apparatus 2 includes a frame 230, a housing assembly mechanism 200, and a bearing mechanism 300. The bearing mechanism 300 may be arranged on the frame 230 and configured to bear the bottom cover 30 and the electrode assembly 20 supported above the bottom cover 30. The housing assembly mechanism 200 may be arranged on the frame 230 and may include a housing fixing mechanism 210 and a tab part guiding mechanism 220. The housing fixing mechanism 210 is configured to fix the housing 10, and the tab part guiding mechanism 220 and the housing fixing mechanism 210 are both capable of moving toward or away from the bearing mechanism 300. The housing fixing mechanism 210 may be configured to be capable of sleeving the housing 10 over the outer side of the electrode assembly 20 via the open end 12 when moving toward the bearing mechanism 300. The tab part guiding mechanism 220 may be configured to guide the tab part 21 to extend out of the accommodating cavity 11 from the through hole 14 when the housing 10 is sleeved over the electrode assembly 20.

The tab part guiding mechanism 220 and the housing fixing mechanism 210 may both be arranged above the bearing mechanism 300, and are both capable of ascending or descending relative to the bearing mechanism 300.

The process of sleeving the housing 10 onto the electrode assembly 20 may include a first stage and a second stage arranged in sequence. In the first stage, the housing fixing mechanism 210 and the tab part guiding mechanism 220 may be configured to be capable of descending together relative to the bearing mechanism 300, thereby enabling the tab part guiding mechanism 220 to come into contact with the tab part 21 in the accommodating cavity 11. In the second stage, the housing fixing mechanism 210 may be configured to be capable of descending relative to the tab part guiding mechanism 220, such that the tab part guiding mechanism 220 guides the tab part 21 to extend out of the accommodating cavity 11 from the through hole 14. Before the first stage, the tab part guiding mechanism 220 may be configured to be capable of descending relative to the housing fixing mechanism 210 in the preset assembly direction, to extend into the accommodating cavity 11 from a side of the housing 10 via the through hole 14, and to descend relative to the bearing mechanism 300 together with the housing fixing mechanism 210 in the first stage.

The housing fixing mechanism 210 is slidably arranged on the frame 230, so as to be capable of ascending, or ascending or descending relative to the frame 230, and the tab part guiding mechanism 220 is slidably connected to the housing fixing mechanism 210, so as to be capable of ascending, or ascending or descending relative to the housing fixing mechanism 210. The housing assembly mechanism 200 includes a first lifting driving mechanism 240, the housing fixing mechanism 210 includes a first support frame 211 and a fixing execution mechanism 212, the first support frame 211 is slidably arranged on the frame 230, the first lifting driving mechanism 240 is arranged on the frame 230 and configured to drive the first support frame 211 to ascend or descend relative to the frame 230, the fixing execution mechanism 212 is arranged on the first support frame 211, and the fixing execution mechanism 212 is configured to fix the housing 10. The housing assembly mechanism 200 includes a second lifting driving mechanism 250, the tab part guiding mechanism 220 includes a second support frame 221 and a guiding execution mechanism 222, the second support frame 221 is slidably arranged on the first support frame 211, the second lifting driving mechanism 250 is arranged on the first support frame 211 and configured to drive the second support frame 221 to ascend or descend relative to the first support frame 211, the guiding execution mechanism 222 is arranged on the second support frame 221, and the guiding execution mechanism 222 is configured to come into contact with and guide the tab part 21.

The housing assembly mechanism 200 includes a guiding and positioning mechanism 260. The guiding and positioning mechanism 260 is slidably arranged on the frame 230, so as to be capable of ascending or descending relative to the frame 230. The housing fixing mechanism 210 is slidably connected to the guiding and positioning mechanism 260, so as to be capable of ascending or descending relative to the guiding and positioning mechanism 260. The guiding and positioning mechanism 260 is configured to position and align the housing 10 and the electrode assembly 20 before the housing 10 is sleeved onto the electrode assembly 20, and is configured to guide the relative movement between the electrode assembly 20 and the housing 10 when the housing 10 is sleeved onto the electrode assembly 20. The housing assembly mechanism 200 includes a third lifting driving mechanism 270. The guiding and positioning mechanism 260 includes a third support frame 261 and a positioning execution mechanism 262. The third support frame 261 is slidably arranged on the frame 230. The third lifting driving mechanism 270 is arranged on the frame 230 and configured to drive the third support frame 261 to ascend or descend relative to the frame 230. The positioning execution mechanism 262 is arranged on the third support frame 261. The positioning execution mechanism 262 is configured to position and align the housing 10 and the electrode assembly 20, and guide the relative movement between the electrode assembly 20 and the housing 10.

The housing assembly mechanism 200 includes a guiding and positioning mechanism 260. The guiding and positioning mechanism 260 is arranged between the housing fixing mechanism 210 and the bearing mechanism 300. The guiding and positioning mechanism 260 is configured to position and align the housing 10 and the electrode assembly 20 before the housing 10 is sleeved onto the electrode assembly 20. The guiding and positioning mechanism 260 is configured to guide the relative movement between the electrode assembly 20 and the housing 10 in the preset assembly direction during the process of sleeving the housing 10 onto the electrode assembly 20. The housing fixing mechanism 210 and the guiding and positioning mechanism 260 are configured to be capable of moving relative to each other in the preset assembly direction, and the housing fixing mechanism 210 can descend relative to the guiding and positioning mechanism 260, such that the guiding and positioning mechanism 260 positions the housing 10. The housing fixing mechanism 210 and the guiding and positioning mechanism 260 are configured to descend together relative to the bearing mechanism 300 after the guiding and positioning mechanism 260 positions the housing 10, such that the guiding and positioning mechanism 260 positions the electrode assembly 20.

The guiding and positioning mechanism 260 includes a positioning and guiding plate 263, the positioning and guiding plate 263 is located between the housing fixing mechanism 210 and the bearing mechanism 300, a positioning hole 264 penetrating in the preset assembly direction is formed in the positioning and guiding plate 263, and the positioning hole 264 is configured to position and align the housing 10 and the electrode assembly 20. The guiding and positioning mechanism 260 includes a positioning driving mechanism 265, the positioning and guiding plate 263 includes at least two guiding plates 2631, the positioning driving mechanism 265 is in transmission connection to the at least two guiding plates 2631, so as to be capable of driving the at least two guiding plates 2631 to fit together or separate from each other in a direction perpendicular to the preset assembly direction, and the at least two guiding plates 2631 are fitted together to define the positioning hole 264 in an enclosing manner. The positioning driving mechanism 265 is configured to drive the at least two guiding plates 2631 to fit together when the housing fixing mechanism 210 descends relative to the guiding and positioning mechanism 260 to a preset position, so as to be capable of positioning the housing 10 through the positioning hole 264. The at least two guiding plates 2631 can descend together with the housing fixing mechanism 210 after being fitted together, so as to be capable of positioning the electrode assembly 20 through the positioning hole 264. Each guiding plate 2631 is provided with a part of a hole wall configured to enclose the positioning hole 264, the part of the hole wall includes a first hole wall section 2632 and a second hole wall section 2633 connected in the preset assembly direction, and an abutment edge part 2634 is formed at the junction between the first hole wall section 2632 and the second hole wall section 2633. When the at least two guiding plates 2631 are fitted together, abutment edge parts 2634 of the guiding plates are fitted together to form a bearing platform surface 2635 facing the housing fixing mechanism 210, and the bearing platform surface 2635 is configured to abut against the open end 12 of the housing 10, so as to be capable of positioning the housing 10. The positioning hole 264 is configured to allow the electrode assembly 20 to be provided in the positioning hole 264 in a penetrating manner from another side of the at least two guiding plates 2631 facing away from the bearing platform surface 2635, so as to be capable of positioning the electrode assembly 20. The positioning driving mechanism 265 is configured to drive the at least two guiding plates 2631 to separate from each other after the tab part guiding mechanism 220 comes into contact with the tab part 21, so as to remove the stop of the bearing platform surface 2635 against the open end 12, thereby enabling the housing fixing mechanism 210 to further sleeve the housing 10 onto the electrode assembly 20. Both sides of the positioning and guiding plate 263 are provided with inclined guiding surfaces 2636, respectively, and the inclined guiding surfaces 2636 converge toward a direction close to the positioning hole 264, so as to guide the open end 12 and the electrode assembly 20 to move into the positioning hole 264.

In some embodiments, as shown in FIG. 10, the bearing mechanism 300 includes a bearing clamp 320 and a clamp driving mechanism 330, and the bearing clamp 320 is connected to the clamp driving mechanism 330. The bearing clamp 320 is configured to clamp the electrode assembly 20, and the clamp driving mechanism 330 is configured to drive the bearing clamp 320 to switch between a clamped state and an unclamped state. The clamp driving mechanism 330 is configured to drive the bearing clamp 320 to switch to the unclamped state during the process of sleeving the housing 10 onto the electrode assembly 20, so as to form a clearance for the housing fixing mechanism 210. The housing fixing mechanism 210 is configured to clamp the housing 10, and the tab part guiding mechanism 220 is configured to clamp the tab part 21, so as to clamp the tab part 21 and guide the tab part 21 to extend out of the accommodating cavity 11 from the through hole 14.

In a second aspect, the present application provides a battery assembly system. The battery assembly system may include the housing insertion apparatus 2 as described above. The battery 1 may include a housing 10, a bottom cover 30, and an electrode assembly 20. The housing 10 is provided with an open end 12, a wall of the housing 10 opposite to the open end 12 is provided with a post terminal 15, the post terminal 15 is provided with a through hole 14, and the housing 10 and the bottom cover 30 are connected to form an accommodating cavity 11 in communication with the through hole 14. An active substance-coated part of the electrode assembly 20 is arranged in the housing, and a tab part 21 of the electrode assembly 20 passes through the through hole 14 and is connected to a side of the post terminal 15 facing away from the accommodating cavity 11.

The battery assembly system may include a conveying device and an assembly device, and the conveying device is configured to convey structures to be assembled and the bearing mechanism 300 as described above to stations of the assembly device. The stations of the assembly device at least include a tab part welding apparatus, a tab part-through apparatus, a post terminal welding apparatus, a bottom cover welding apparatus, and the housing insertion apparatus 2 as described above.

The tab part welding apparatus may be configured to weld a plurality of tab plates of the electrode assembly 20 to form the tab part 21. The housing insertion apparatus 2 is configured to assemble the electrode assembly 20 into the housing 10 from the open end 12. The tab part-through apparatus is configured to clamp the tab part 21 to pass through the through hole 14 when the electrode assembly 20 is inserted into the housing 10. The post terminal welding apparatus is configured to weld the tab part 21 that passes through the through hole to the side of the post terminal 15 facing away from the accommodating cavity 11. The bottom cover welding apparatus is configured to weld the bottom cover 30 to the open end 12 of the housing 10.

In a third aspect, as shown in FIG. 1, the present application provides an assembly method for a battery 1. The battery 1 includes a housing 10 and an electrode assembly 20. An accommodating cavity 11 and an open end 12 in communication with the accommodating cavity 11 are formed on the housing 10, and the housing 10 is further provided with a top part 13 arranged opposite to the open end 12. A through hole 14 in communication with the accommodating cavity 11 and the outside is formed in the top part 13. An end of the electrode assembly 20 is provided with a tab part 21. The housing 10 is configured to be sleeved onto the electrode assembly 20 via the open end 12, so as to accommodate the electrode assembly 20 in the accommodating cavity 11, and allow the tab part 21 to extend into the through hole 14.

The assembly method includes: separately fixing the housing 10 and the electrode assembly 20; controlling the housing 0 to descend relative to the bearing mechanism 300, thereby sleeving the housing 10 onto the electrode assembly 20 through the open end 12 during the descent; and guiding the tab part 21 to extend out of the accommodating cavity 11 from the through hole 14 during the process of sleeving the housing 10 onto the electrode assembly 20.

Before controlling the housing 10 to descend relative to the bearing mechanism 300, the method includes: extending into the accommodating cavity 11 from a side of the housing 10 via the through hole 14. Guiding the tab part 21 to extend out of the accommodating cavity 11 from the through hole 14 includes: coming into contact with the tab part 21 and guiding the tab part 21 to extend out of the accommodating cavity 11 from the through hole 14 during the process of sleeving the housing 10 onto the electrode assembly 20.

During the process of sleeving the housing 10 onto the electrode assembly 20, coming into contact with the tab part 21 and guiding the tab part 21 to extend out of the accommodating cavity 11 from the through hole 14 includes: coming into contact with the tab part 21 in the accommodating cavity 11 in a first stage; and controlling the housing 10 to descend relative to the tab part 21 and guiding the tab part 21 to extend out of the accommodating cavity 11 from the through hole 14 in a second stage.

The assembly method further includes: welding the tab part 21 to the post terminal 15.

The battery 1 may further include a post terminal cover plate 40. The assembly method further includes: welding the post terminal cover plate 40 to the post terminal 15, thereby enabling the post terminal cover plate 40 to close the through hole 14.

In summary, in the present application, the housing fixing mechanism 210 and the tab part guiding mechanism 220 are arranged on the housing insertion apparatus 2. During the descent, the housing fixing mechanism 210 can sleeve the housing 10 onto the electrode assembly 20 through the open end 12, and during the process of sleeving the housing 10 onto the electrode assembly 20, the tab part guiding mechanism 220 can guide the tab part 21 to extend out of the accommodating cavity 11 from the through hole 14. This design ensures that during the insertion of the electrode assembly 20 of the battery 1 into the housing, the tab part 21 of the battery 1 can be guided to pass through the through hole 14, such that the tab part 21 is less likely to block the housing 10 from being sleeved onto the electrode assembly 20, thereby achieving the precise insertion of the electrode assembly 20 into the housing, and improving the assembly efficiency and the yield rate of the housing insertion apparatus 2.

The above descriptions are merely embodiments of the present application and do not thereby limit the patent scope of the present application. Any equivalent structures or equivalent process changes made based on the content of the specification and drawings of the present application, or any direct or indirect application in other related technical fields, shall likewise be included within the scope of patent protection of the present application.

## Claims

1. A housing insertion apparatus for a battery, wherein the battery comprises a housing, a bottom cover, and an electrode assembly; the housing is provided with an open end, a wall of the housing opposite to the open end is provided with a post terminal, the post terminal is provided with a through hole, and the housing and the bottom cover are connected to form an accommodating cavity in communication with the through hole; an active substance-coated part of the electrode assembly is arranged in the housing, and a tab part of the electrode assembly passes through the through hole and is connected to a side of the post terminal facing away from the accommodating cavity; the housing insertion apparatus comprises:
a frame;
a bearing mechanism arranged on the frame and configured to bear the bottom cover and the electrode assembly supported above the bottom cover; and
a housing assembly mechanism arranged on the frame and comprising a housing fixing mechanism and a tab part guiding mechanism, wherein the housing fixing mechanism is configured to fix the housing, and the tab part guiding mechanism and the housing fixing mechanism are both capable of moving toward or away from the bearing mechanism,
wherein the housing fixing mechanism is configured to be capable of sleeving the housing over an outer side of the electrode assembly via the open end when moving toward the bearing mechanism; the tab part guiding mechanism is configured to guide the tab part to extend out of the accommodating cavity from the through hole when the housing is sleeved over the electrode assembly.

2. The housing insertion apparatus according to claim 1, wherein
the tab part guiding mechanism and the housing fixing mechanism are both arranged above the bearing mechanism, and are both capable of ascending or descending relative to the bearing mechanism.

3. The housing insertion apparatus according to claim 2, wherein
a process of sleeving the housing onto the electrode assembly comprises a first stage and a second stage arranged in sequence; in the first stage, the housing fixing mechanism and the tab part guiding mechanism are configured to be capable of descending together relative to the bearing mechanism, thereby enabling the tab part guiding mechanism to come into contact with the tab part in the accommodating cavity; in the second stage, the housing fixing mechanism is configured to be capable of descending relative to the tab part guiding mechanism, thereby enabling the tab part guiding mechanism to guide the tab part to extend out of the accommodating cavity from the through hole.

4. The housing insertion apparatus according to claim 3, wherein
before the first stage, the tab part guiding mechanism is configured to be capable of descending relative to the housing fixing mechanism in a preset assembly direction, to extend into the accommodating cavity from a side of the housing via the through hole, and to descend relative to the bearing mechanism together with the housing fixing mechanism in the first stage.

5. The housing insertion apparatus according to claim 2, wherein
the housing fixing mechanism is slidably arranged on the frame, so as to be capable of ascending or descending relative to the bearing mechanism, and the tab part guiding mechanism is slidably connected to the housing fixing mechanism, so as to be capable of ascending, or ascending or descending relative to the bearing mechanism.

6. The housing insertion apparatus according to claim 5, wherein
the housing assembly mechanism comprises a first lifting driving mechanism, the housing fixing mechanism comprises a first support frame and a fixing execution mechanism, the first support frame is slidably arranged on the frame, the first lifting driving mechanism is arranged on the frame and configured to drive the first support frame to ascend or descend relative to the frame, the fixing execution mechanism is arranged on the first support frame, and the fixing execution mechanism is configured to fix the housing;
the housing assembly mechanism further comprises a second lifting driving mechanism, the tab part guiding mechanism comprises a second support frame and a guiding execution mechanism, the second support frame is slidably arranged on the first support frame, the second lifting driving mechanism is arranged on the first support frame and configured to drive the second support frame to ascend or descend relative to the first support frame, the guiding execution mechanism is arranged on the second support frame, and the guiding execution mechanism is configured to come into contact with and guide the tab part.

7. The housing insertion apparatus according to claim 5, wherein
the housing assembly mechanism comprises a guiding and positioning mechanism; the guiding and positioning mechanism is slidably arranged on the frame, so as to be capable of ascending or descending relative to the frame; the housing fixing mechanism is slidably connected to the guiding and positioning mechanism, so as to be capable of ascending or descending relative to the guiding and positioning mechanism; the guiding and positioning mechanism is configured to position and align the housing and the electrode assembly before the housing is sleeved onto the electrode assembly, and is configured to guide a relative movement between the electrode assembly and the housing when the housing is sleeved onto the electrode assembly.

8. The housing insertion apparatus according to claim 7, wherein
the housing assembly mechanism further comprises a third lifting driving mechanism; the guiding and positioning mechanism comprises a third support frame and a positioning execution mechanism, the third support frame is slidably arranged on the frame, and the third lifting driving mechanism is arranged on the frame and configured to drive the third support frame to ascend or descend relative to the frame; the positioning execution mechanism is arranged on the third support frame; the positioning execution mechanism is configured to position and align the housing and the electrode assembly, and to guide the relative movement between the electrode assembly and the housing.

9. The housing insertion apparatus according to claim 1, wherein
the housing assembly mechanism comprises a guiding and positioning mechanism, and the guiding and positioning mechanism is arranged between the housing fixing mechanism and the bearing mechanism; the guiding and positioning mechanism is configured to position and align the housing and the electrode assembly before the housing is sleeved onto the electrode assembly.

10. The housing insertion apparatus according to claim 9, wherein
the guiding and positioning mechanism is configured to guide a relative movement between the electrode assembly and the housing in a preset assembly direction during a process of sleeving the housing onto the electrode assembly.

11. The housing insertion apparatus according to claim 10, wherein
the housing fixing mechanism and the guiding and positioning mechanism are configured to be capable of moving relative to each other in the preset assembly direction, and the housing fixing mechanism is capable of descending relative to the guiding and positioning mechanism, such that the guiding and positioning mechanism positions the housing;
the housing fixing mechanism and the guiding and positioning mechanism are configured to descend together relative to the bearing mechanism after the guiding and positioning mechanism positions the housing, such that the guiding and positioning mechanism positions the electrode assembly.

12. The housing insertion apparatus according to claim 10, wherein
the guiding and positioning mechanism comprises a positioning and guiding plate, the positioning and guiding plate is located between the housing fixing mechanism and the bearing mechanism, a positioning hole penetrating in the preset assembly direction is formed in the positioning and guiding plate, and the positioning hole is configured to position and align the housing and the electrode assembly.

13. The housing insertion apparatus according to claim 12, wherein
the guiding and positioning mechanism comprises a positioning driving mechanism, the positioning and guiding plate comprises at least two guiding plates, the positioning driving mechanism is in transmission connection to the at least two guiding plates, so as to be capable of driving the at least two guiding plates to fit together or separate from each other in a direction perpendicular to the preset assembly direction, and the at least two guiding plates are fitted together to define the positioning hole in an enclosing manner.

14. The housing insertion apparatus according to claim 13, wherein
the positioning driving mechanism is configured to drive the at least two guiding plates to fit together when the housing fixing mechanism descends relative to the guiding and positioning mechanism to a preset position, so as to be capable of positioning the housing through the positioning hole; the at least two guiding plates are capable of descending together with the housing fixing mechanism after being fitted together, so as to be capable of positioning the electrode assembly through the positioning hole.

15. The housing insertion apparatus according to claim 13, wherein
each guiding plate is provided with a part of a hole wall configured to enclose the positioning hole, the part of the hole wall comprises a first hole wall section and a first hole wall section connected in the preset assembly direction, and an abutment edge part is formed at a junction between the first hole wall section and the first hole wall section; when the at least two guiding plates are fitted together, abutment edge parts thereof are fitted together to form a bearing platform surface facing the housing fixing mechanism, and the bearing platform surface is configured to abut against the open end of the housing, so as to be capable of positioning the housing; the positioning hole is configured to allow the electrode assembly to be provided in the positioning hole in a penetrating manner from another side of the at least two guiding plates facing away from the bearing platform surface, so as to be capable of positioning the electrode assembly.

16. The housing insertion apparatus according to claim 15, wherein
the positioning driving mechanism is configured to drive the at least two guiding plates to separate from each other after the tab part guiding mechanism comes into contact with the tab part, so as to remove a stop of the bearing platform surface against the open end, thereby enabling the housing fixing mechanism to further sleeve the housing onto the electrode assembly.

17. The housing insertion apparatus according to claim 12, wherein
both sides of the positioning and guiding plate are provided with inclined guiding surfaces, respectively, and the inclined guiding surfaces converge toward a direction close to the positioning hole, so as to guide the open end and the electrode assembly to move into the positioning hole.

18. The housing insertion apparatus according to claim 1, wherein
the bearing mechanism comprises a bearing clamp and a clamp driving mechanism, and the clamp driving mechanism is connected to the bearing clamp; the bearing clamp is configured to clamp the electrode assembly, and the clamp driving mechanism is configured to drive the bearing clamp to switch between a clamped state and an unclamped state; the clamp driving mechanism is configured to drive the bearing clamp to switch to the unclamped state during a process of sleeving the housing onto the electrode assembly, so as to form a clearance for the housing fixing mechanism.

19. The housing insertion apparatus according to claims 1 to 18, wherein
the housing fixing mechanism is configured to clamp the housing, and the tab part guiding mechanism is configured to clamp the tab part, so as to clamp the tab part and guide the tab part to extend out of the accommodating cavity from the through hole.

20. A battery assembly system, comprising the housing insertion apparatus according to any one of claims 1 to 19.

21. The battery assembly system according to claim 20, wherein
the battery assembly system further comprises a conveying device and an assembly device, wherein the conveying device is configured to convey structures to be assembled to stations of the assembly device; the stations of the assembly device comprise the housing insertion apparatus and at least further comprise a tab part welding apparatus, a tab part-through apparatus, a post terminal welding apparatus, and a bottom cover welding apparatus,
wherein the tab part welding apparatus is configured to weld a plurality of tab parts of the electrode assembly to form a tab part; the housing insertion apparatus is configured to assemble the electrode assembly into the housing through the open end; the tab part-through apparatus is configured to clamp the tab part to pass through the through hole when the electrode assembly is inserted into the housing; the post terminal welding apparatus is configured to weld the tab part that passes through the through hole to the side of the post terminal facing away from the accommodating cavity; the bottom cover welding apparatus is configured to weld the bottom cover to the open end of the housing.

22. An assembly method for a battery, wherein the battery comprises a housing and an electrode assembly; the housing is provided with an open end, a wall of the housing opposite to the open end is provided with a post terminal, the post terminal is provided with a through hole, and the housing and the bottom cover are connected to form an accommodating cavity in communication with the through hole; an active substance-coated part of the electrode assembly is arranged in the housing, and a tab part of the electrode assembly passes through the through hole and is connected to a side of the post terminal facing away from the accommodating cavity; the assembly method for the battery comprises:
separately fixing the housing and the electrode assembly;
controlling the housing to descend relative to the electrode assembly, thereby sleeving the housing onto the electrode assembly through the open end during descent; and
guiding the tab part to extend out of the accommodating cavity from the through hole during a process of sleeving the housing onto the electrode assembly.

23. The assembly method according to claim 22, wherein
before controlling the housing to descend relative to the electrode assembly, the method comprises:
extending into the accommodating cavity from a side of the housing via the through hole to clamp the tab part;
guiding the tab part to extend out of the accommodating cavity from the through hole comprises:
coming into contact with the tab part and guiding the tab part to extend out of the accommodating cavity from the through hole during the process of sleeving the housing onto the electrode assembly.

24. The assembly method according to claim 23, wherein
coming into contact with the tab part and guiding the tab part to extend out of the accommodating cavity from the through hole during the process of sleeving the housing onto the electrode assembly comprises:
coming into contact with the tab part in the accommodating cavity in a first stage; and
controlling the housing to descend relative to the tab part and guiding the tab part to extend out of the accommodating cavity from the through hole in a second stage.

25. The assembly method according to claim 24, wherein
the assembly method further comprises:
welding the tab part to the post terminal.

26. The assembly method according to claim 25, wherein the battery further comprises a post terminal cover plate; the assembly method further comprises:
welding the post terminal cover plate to the post terminal, thereby enabling the post terminal cover plate to close the through hole.
